(19) Europäisches Patentamt
European Patent Office
Office européen des brevets

(11) **EP 4 686 205 A1**

(12) **EUROPEAN PATENT APPLICATION**
published in accordance with Art. 153(4) EPC

(43) Date of publication:
**28.01.2026 Bulletin 2026/05**

(21) Application number: **24775190.2**

(22) Date of filing: **20.03.2024**

(51) International Patent Classification (IPC):
**H04N 19/597** *(2014.01)*  **H04N 19/174** *(2014.01)*
**H04N 19/30** *(2014.01)*  **H04N 19/157** *(2014.01)*
**H04N 19/96** *(2014.01)*  **H04N 19/91** *(2014.01)*
**H04N 19/70** *(2014.01)*

(52) Cooperative Patent Classification (CPC):
**H04N 19/157; H04N 19/174; H04N 19/30;**
**H04N 19/597; H04N 19/70; H04N 19/91;**
**H04N 19/96**

(86) International application number:
**PCT/KR2024/003482**

(87) International publication number:
**WO 2024/196143 (26.09.2024 Gazette 2024/39)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **20.03.2023 KR 20230036096**

(71) Applicant: **LG Electronics Inc.**
**Yeongdeungpo-gu**
**Seoul 07336 (KR)**

(72) Inventor: **OH, Hyunmook**
**Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **POINT CLOUD DATA TRANSMISSION DEVICE, POINT CLOUD DATA TRANSMISSION METHOD, POINT CLOUD DATA RECEPTION DEVICE, AND POINT CLOUD DATA RECEPTION METHOD**

(57)    A point cloud data transmission method according to the embodiments may comprise the steps of encoding point cloud data, and transmitting a bitstream comprising the point cloud data. A point cloud data reception method according to the embodiments may comprise the steps of receiving a bitstream comprising point cloud data, and decoding the point cloud data.

FIG. 1

## Description

[Technical Field]

Embodiments relate to a method and device for processing point cloud content.

[Background Art]

Point cloud content is content represented by a point cloud, which is a set of points belonging to a coordinate system representing a three-dimensional space. The point cloud content may express media configured in three dimensions, and is used to provide various services such as virtual reality (VR), augmented reality (AR), mixed reality (MR), and self-driving services. However, tens of thousands to hundreds of thousands of point data are required to represent point cloud content. Therefore, there is a need for a method for efficiently processing a large amount of point data.

[Disclosure]

[Technical Problem]

Embodiments provide a device and method for efficiently processing point cloud data. Embodiments provide a point cloud data processing method and device for addressing latency and encoding/decoding complexity.
The technical scope of the embodiments is not limited to the aforementioned technical objects, and may be extended to other technical objects that may be inferred by those skilled in the art based on the entire contents disclosed herein.

[Technical Solution]

In one aspect of the present disclosure, a method of transmitting point cloud data may include encoding point cloud data, and transmitting a bitstream containing the point cloud data. In another aspect of the present disclosure, a method of receiving point cloud data may include receiving a bitstream containing point cloud data, and decoding the point cloud data.

[Advantageous Effects]

Devices and methods according to embodiments may process point cloud data with high efficiency.
The devices and methods according to the embodiments may provide a high-quality point cloud service.
The devices and methods according to the embodiments may provide point cloud content for providing general-purpose services such as a VR service and a self-driving service.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts.

FIG. 1 shows an exemplary point cloud content providing system according to embodiments;
FIG. 2 is a block diagram illustrating a point cloud content providing operation according to embodiments;
FIG. 3 illustrates an exemplary point cloud encoder according to embodiments;
FIG. 4 shows an example of an octree and occupancy code according to embodiments;
FIG. 5 illustrates an example of point configuration in each LOD according to embodiments;
FIG. 6 illustrates an example of point configuration in each LOD according to embodiments;
FIG. 7 illustrates a point cloud decoder according to embodiments;
FIG. 8 illustrates a transmission device according to embodiments;
FIG. 9 illustrates a reception device according to embodiments;
FIG. 10 illustrates an exemplary structure operable in connection with point cloud data transmission/reception methods/devices according to embodiments;

FIG. 11 illustrates a process of encoding, transmitting, and decoding point cloud data according to embodiments;

FIG. 12 illustrates a layer-based point cloud data configuration according to embodiments;

FIG. 13 illustrates a structure of geometry and attribute bitstreams according to embodiments;

FIG. 14 illustrates bitstream configurations according to embodiments and a bitstream sorting method according to embodiments;

FIG. 15 illustrates a bitstream sorting method according to embodiments;

FIG. 16 illustrates a bitstream sorting method according to embodiments;

FIG. 17 illustrates a method of selecting geometry data and attribute data according to embodiments;

FIG. 18 illustrates a method of selecting a bitstream according to embodiments;

FIG. 19 illustrates a method of configuring slices containing point cloud data according to embodiments;

FIG. 20 illustrates a geometry coding layer structure according to embodiments.

FIG. 21 illustrates a layer group and subgroup structure according to embodiments;

FIG. 22 illustrates a multi-resolution, multi-size ROI according to embodiments;

FIG. 23 illustrates layer group slices according to embodiments;

FIG. 24 illustrates an encoding process for layer group slicing according to embodiments;

FIG. 25 illustrates a decoding process for layer group slicing according to embodiments;

FIG. 26 illustrates a bitstream configuration according to embodiments;

FIGS. 27A and 27B illustrate a sequence parameter set (SPS) according to embodiments;

FIG. 28 illustrates a dependent geometry data unit header according to embodiments;

FIG. 29 illustrates a layer group structure inventory according to embodiments;

FIG. 30 illustrates a dependent geometry data unit header according to embodiments;

FIG. 31 illustrates transmission and reception of point cloud data based on layers according to embodiments;

FIG. 32 illustrates transmission and reception of point cloud data based on layers according to embodiments;

FIG. 33 illustrates a method of transmitting point cloud data according to embodiments; and

FIG. 34 illustrates a method of receiving point cloud data according to embodiments.

[Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

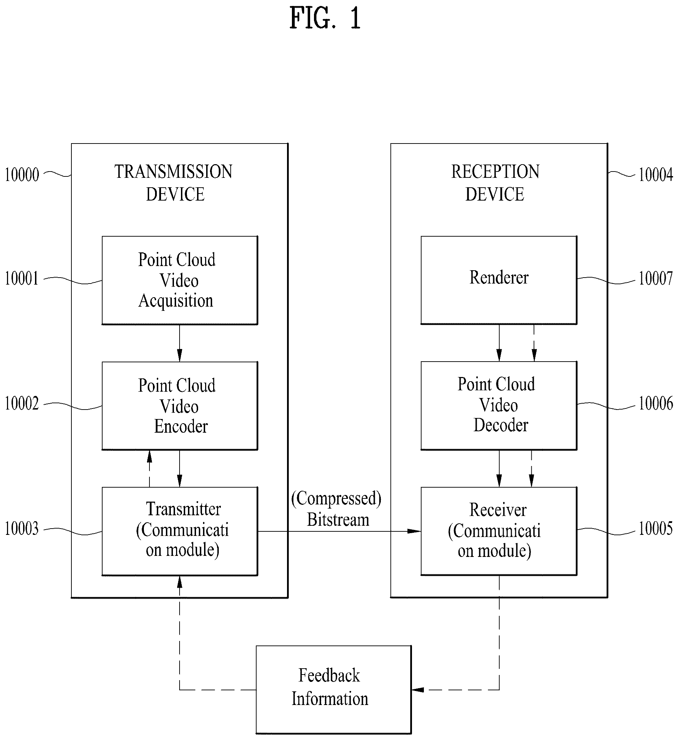

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquirer 10001, a point cloud video encoder 10002, and/or a transmitter (or communication module) 10003.

The point cloud video acquirer 10001 according to the embodiments acquires a point cloud video through a processing process such as capture, synthesis, or generation. The point cloud video is point cloud content represented by a point cloud, which is a set of points positioned in a 3D space, and may be referred to as point cloud video data, point cloud data, or the like. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (e.g., a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (e.g., a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (e.g., in a reverse process of the operation of the point cloud video encoder 10002). Accordingly, the point cloud video decoder 10006 may decode the point cloud video data by performing point cloud decompression coding, which is the reverse process to the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The point cloud content providing system may process (encode/decode) point cloud data based on the feedback information. Accordingly, the point cloud video data decoder 10006 may perform a decoding operation based on the feedback information. The reception device 10004 may transmit the feedback information to the transmission device 10000. The transmission device 10000 (or the point cloud video data encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, or the like, and the reception device 10004 may be called a decoder, a receiving device, a receiver, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

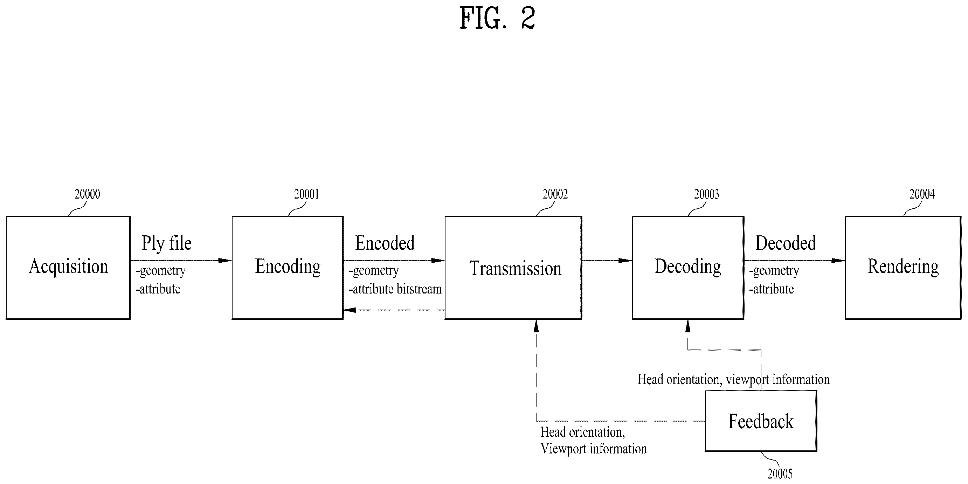

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (e.g., the point cloud transmission device 10000 or the point cloud video acquirer 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (e.g., values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, position information, position data, or the like, and the attribute may be called attributes, attribute information, attribute data, or the like. The point cloud content providing system (e.g., the point cloud transmission device 10000 or the point cloud video acquirer 10001) may secure point cloud data from information (e.g., depth information, color information, etc.) related to the acquisition process of the point cloud video.

The point cloud content providing system (e.g., the transmission device 10000 or the point cloud video encoder 10002) according to the embodiments may encode the point cloud data (20001). The point cloud content providing system may encode the point cloud data based on point cloud compression coding. As described above, the point cloud data may include the geometry information and attribute information about a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (e.g., the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (e.g., signaling information related to the geometry encoding and the attribute encoding). The point cloud content providing system may encapsulate a bitstream that carries the encoded point cloud data and transmit the same in the form of a file or segment.

The point cloud content providing system (e.g., the reception device 10004 or the receiver 10005) according to the embodiments may receive the bitstream containing the encoded point cloud data. In addition, the point cloud content providing system (e.g., the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (e.g., the reception device 10004 or the point cloud video decoder 10005) may decode the point cloud video data based on the signaling information related to encoding of the point cloud video data contained in the bitstream. The point cloud content providing system (e.g., the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (e.g., the reception device 10004 or the point cloud video decoder 10005) may reconstruct the point cloud video based on the positions according to the reconstructed geometry and the decoded attributes.

The point cloud content providing system according to the embodiments (e.g., the reception device 10004 or the renderer 10007) may render the decoded point cloud data (20004). The point cloud content providing system (e.g., the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.). The point cloud content providing system (e.g., the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus a detailed description thereof is omitted.

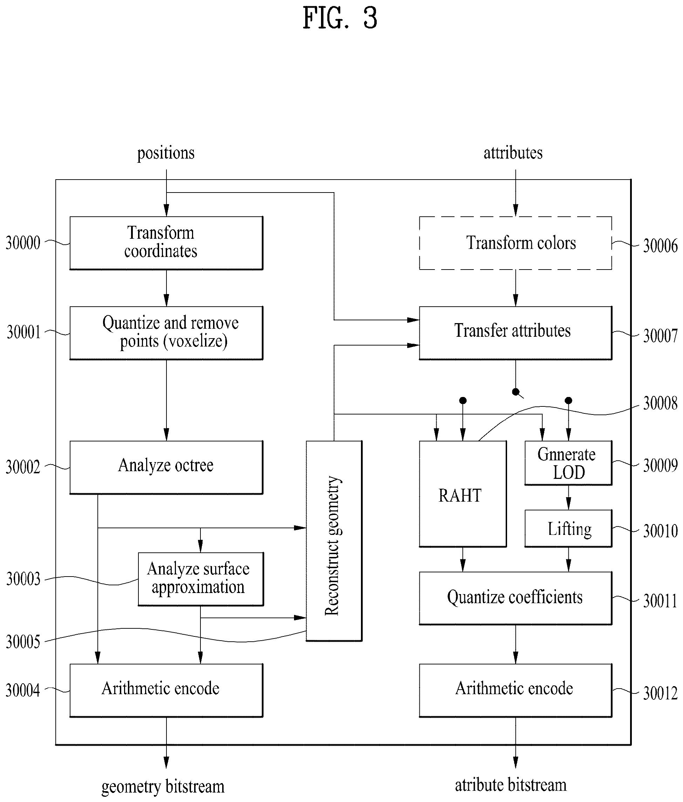

FIG. 3 illustrates an exemplary point cloud encoder according to embodiments.

FIG. 3 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 and 2, the point cloud encoder may perform geometry encoding and attribute encoding. The geometry encoding is performed before the attribute encoding.

The point cloud encoder according to the embodiments includes a coordinate transformer (Transform coordinates) 30000, a quantizer (Quantize and remove points (voxelize)) 30001, an octree analyzer (Analyze octree) 30002, and a surface approximation analyzer (Analyze surface approximation) 30003, an arithmetic encoder (Arithmetic encode) 30004, a geometry reconstructor (Reconstruct geometry) 30005, a color transformer (Transform colors) 30006, an attribute transformer (Transform attributes) 30007, a RAHT transformer (RAHT) 30008, an LOD generator (Generate LOD) 30009, a lifting transformer (Lifting) 30010, a coefficient quantizer (Quantize coefficients) 30011, and/or an arithmetic encoder (Arithmetic encode) 30012.

The coordinate transformer 30000, the quantizer 30001, the octree analyzer 30002, the surface approximation analyzer 30003, the arithmetic encoder 30004, and the geometry reconstructor 30005 may perform geometry encoding. The geometry encoding according to the embodiments may include octree geometry coding, predictive tree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 30000 according to the embodiments receives positions and transforms the same into coordinates. For example, the positions may be transformed into position information in a three-dimensional space (e.g., a three-dimensional space represented by an XYZ coordinate system). The position information in the three-dimensional space according to the embodiments may be referred to as geometry information.

The quantizer 30001 according to the embodiments quantizes the geometry. For example, the quantizer 30001 may quantize the points based on a minimum position value of all points (e.g., a minimum value on each of the X, Y, and Z axes). The quantizer 30001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 30001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 30001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 30002 according to the embodiments performs octree geometry coding (or octree coding) to present voxels in an octree structure. The octree structure represents points matched with voxels, based on the octal tree structure.

The surface approximation analyzer 30003 according to the embodiments may analyze and approximate the octree. The octree analysis and approximation according to the embodiments is a process of analyzing a region containing a plurality of points to efficiently provide octree and voxelization.

The arithmetic encoder 30004 according to the embodiments performs entropy encoding on the octree and/or the approximated octree. For example, the encoding scheme includes arithmetic encoding. As a result of the encoding, a geometry bitstream is generated.

The color transformer 30006, the attribute transformer 30007, the RAHT transformer 30008, the LOD generator 30009, the lifting transformer 30010, the coefficient quantizer 30011, and/or the arithmetic encoder 30012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 30006 according to the embodiments performs color transform coding of transforming color values (or textures) included in the attributes. For example, the color transformer 30006 may transform the format of color information (for example, from RGB to YCbCr). The operation of the color transformer 30006 according to embodiments may be optionally applied according to the color values included in the attributes.

The geometry reconstructor 30005 according to the embodiments reconstructs (decompresses) the octree and/or the approximated octree. The geometry reconstructor 30005 reconstructs the octree/voxels based on the result of analyzing the distribution of points. The reconstructed octree/voxels may be referred to as reconstructed geometry (restored geometry).

The attribute transformer 30007 according to the embodiments performs attribute transformation to transform the attributes based on the reconstructed geometry and/or the positions on which geometry encoding is not performed. As described above, since the attributes are dependent on the geometry, the attribute transformer 30007 may transform the attributes based on the reconstructed geometry information. For example, based on the position value of a point included in a voxel, the attribute transformer 30007 may transform the attribute of the point at the position. As described above, when the position of the center of a voxel is set based on the positions of one or more points included in the voxel, the attribute transformer 30007 transforms the attributes of the one or more points. When the trisoup geometry encoding is performed, the attribute transformer 30007 may transform the attributes based on the trisoup geometry encoding.

The attribute transformer 30007 may perform the attribute transformation by calculating the average of attributes or attribute values of neighboring points (e.g., color or reflectance of each point) within a specific position/radius from the position (or position value) of the center of each voxel. The attribute transformer 30007 may apply a weight according to the distance from the center to each point in calculating the average. Accordingly, each voxel has a position and a calculated attribute (or attribute value).

The attribute transformer 30007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 30007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 30009. The RAHT transformer 30008 according to the embodiments performs RAHT coding for predicting attribute information based on the reconstructed geometry information. For example, the RAHT transformer 30008 may predict attribute information of a node at a higher level in the octree based on the attribute information associated with a node at a lower level in the octree.

The LOD generator 30009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 30010 according to the embodiments performs lifting transform coding of transforming the attributes a point cloud based on weights. As described above, lifting transform coding may be optionally applied.

The coefficient quantizer 30011 according to the embodiments quantizes the attribute-coded attributes based on coefficients. The arithmetic encoder 30012 according to the embodiments encodes the quantized attributes based on arithmetic coding. Although not shown in the figure, the elements of the point cloud encoder of FIG. 3 may be implemented by hardware including one or more processors or integrated circuits configured to communicate with one or more memories included in the point cloud providing device, software, firmware, or a combination thereof. The one or more processors may perform at least one of the operations and/or functions of the elements of the point cloud encoder of FIG. 3 described above. Additionally, the one or more processors may operate or execute a set of software programs and/or instructions for performing the operations and/or functions of the elements of the point cloud encoder of FIG. 3. The one or more memories according to the embodiments may include a high speed random access memory, or include a non-volatile memory (e.g., one or more magnetic disk storage devices, flash memory devices, or other non-volatile solid-state memory devices).

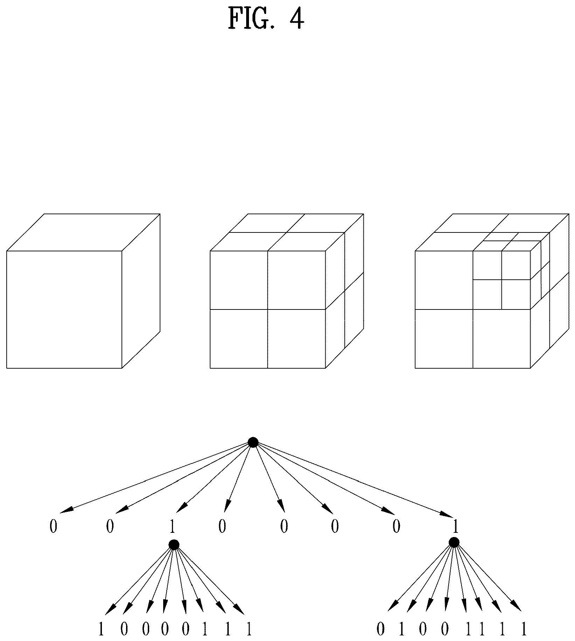

FIG. 4 shows an example of an octree and occupancy code according to embodiments.

As described with reference to FIGS. 1 to 3, the point cloud content providing system (point cloud video encoder 10002) or the point cloud encoder (e.g., the octree analyzer 30002) performs octree geometry coding (or octree coding) based on an octree structure to efficiently manage the region and/or position of the voxel.

The upper part of FIG. 4 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles (0, 0, 0) and (2d, 2d, 2d). Here, 2d may be set to a value constituting the smallest bounding box surrounding all points of the point cloud content (or point cloud video). Here, d denotes the depth of the octree. The value of d is determined in the following equation. In the following equation, (xintn, yintn, zintn) denotes the positions (or position values) of quantized points.

$$d = Ceil(Log2(Max(x\_n^int, y\_n^int, z\_n^in, n=1, \ldots, N)+1))$$

As shown in the middle of the upper part of FIG. 4, the entire 3D space may be divided into eight spaces according to partition. Each divided space is represented by a cube with six faces. As shown in the upper right of FIG. 4, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 4 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 4 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (e.g., the arithmetic encoder 30004) according to the embodiments may perform entropy encoding on the occupancy codes. In order to increase the compression efficiency, the point cloud encoder may perform intra/inter-coding on the occupancy codes. The reception device (e.g., the reception device 10004 or the point cloud video decoder 10006) according to the embodiments reconstructs the octree based on the occupancy codes.

The point cloud encoder (e.g., the point cloud encoder of FIG. 4 or the octree analyzer 30002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 30004) according to the embodiments may perform entropy coding on the positions (or position values) of the points.

The point cloud encoder (e.g., the surface approximation analyzer 30003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector ($\Delta$x, $\Delta$y, $\Delta$z) of the edge, and the vertex position value (relative position value within the edge). When the trisoup geometry encoding is applied, the point cloud encoder according to the embodiments (e.g., the geometry reconstructor 30005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the subtraction.

$$① \begin{bmatrix} \mu_x \\ \mu_y \\ \mu_z \end{bmatrix} = \frac{1}{n} \sum_{i=1}^{n} \begin{bmatrix} x_i \\ y_i \\ z_i \end{bmatrix} \quad ② \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix} \quad ③ \begin{bmatrix} \sigma_x^2 \\ \sigma_y^2 \\ \sigma_z^2 \end{bmatrix} = \sum_{i=1}^{n} \begin{bmatrix} \bar{x}_i^2 \\ \bar{y}_i^2 \\ \bar{z}_i^2 \end{bmatrix}$$

The minimum value of the sum is estimated, and the projection process is performed according to the axis with the minimum value. For 'example, when the element x is the minimum, each vertex is projected on the x-axis with respect to the center of the block, and projected on the (y, z) plane. When the values obtained through projection on the (y, z) plane are (ai, bi), the value of $\theta$ is estimated through atan2(bi, ai), and the vertices are ordered based on the value of $\theta$. The table below shows a combination of vertices for creating a triangle according to the number of the vertices. The vertices are ordered from 1 to n. The table below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

TABEL 2-1. Triangles formed from vertices ordered 1,...,n

n triangles

(continued)

3 (1,2,3)

4 (1,2,3), (3,4,1)

5 (1,2,3), (3,4,5), (5,1,3)

6 (1,2,3), (3,4,5), (5,6,1), (1,3,5)

7 (1,2,3), (3,4,5), (5,6,7), (7,1,3), (3,5,7)

8 (1,2,3), (3,4,5), (5,6,7), (7,8,1), (1,3,5), (5,7,1)

9 (1,2,3), (3,4,5), (5,6,7), (7,8,9), (9,1,3), (3,5,7), (7,9,3)

10 (1,2,3), (3,4,5), (5,6,7), (7,8,9), (9,10,1), (1,3,5), (5,7,9), (9,1,5)

11 (1,2,3), (3,4,5), (5,6,7), (7,8,9), (9,10,11), (11,1,3), (3,5,7), (7,9,11), (11,3,7)

12 (1,2,3), (3,4,5), (5,6,7), (7,8,9), (9,10,11), (11,12,1), (1,3,5), (5,7,9), (9,11,1), (1,5,9)

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

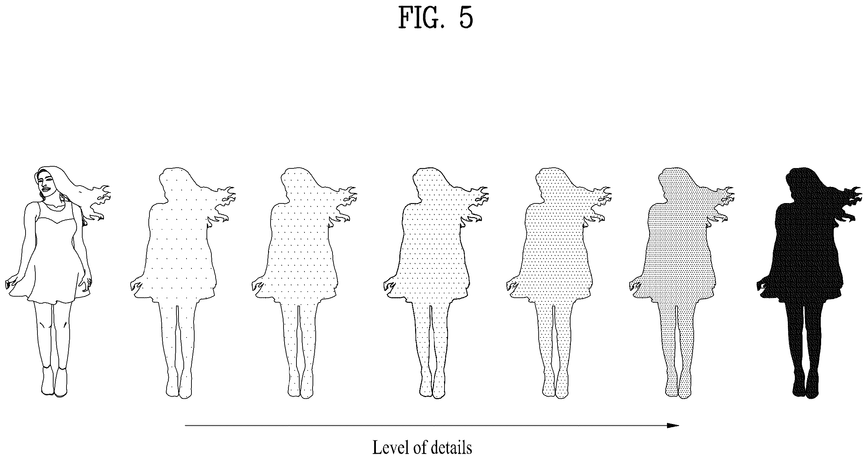

FIG. 5 illustrates an example of point configuration in each LOD according to embodiments.

As described with reference to FIGS. 1 to 4, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (e.g., the LOD generator 30009) may classify (or reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

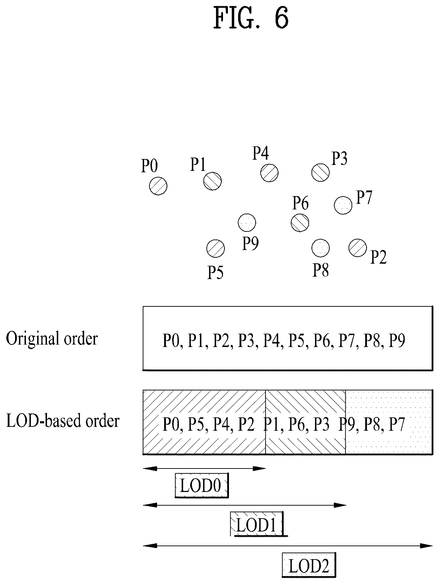

FIG. 6 illustrates an example of point configuration for each LOD according to embodiments.

As described with reference to FIGS. 1 to 5, the point cloud content providing system, or the point cloud encoder (e.g., the point cloud video encoder 10002, the point cloud encoder of FIG. 3, or the LOD generator 30009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder. The upper part of FIG. 6 shows examples (P0 to P9) of points of the point cloud content distributed in a 3D space. In FIG. 6, the original order represents the order of points P0 to P9 before LOD generation. In FIG. 6, the LOD based order represents the order of points according to the LOD generation. Points are reorganized by LOD. Also, a high LOD contains the points belonging to lower LODs. As shown in FIG. 6, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 3, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (e.g., the coefficient quantizer 30011) may quantize and inversely quantize the residuals (which may be called residual attributes, residual attribute values, or attribute prediction residuals, attribute residuals) obtained by subtracting a predicted attribute (attribute value) from the attribute (attribute value) of each point. The quantization process is configured as shown in the following table.

```
TABLE Attribute prediction residuals quantization pseudo code
int PCCQuantization(int value, int quantStep) {
if( value >=0) {
return floor(value / quantStep + 1.0 / 3.0);
} else {
return -floor(-value / quantStep + 1.0 / 3.0);
}
}
TABLE Attribute prediction residuals inverse quantization pseudo code
int PCCInverseQuantization(int value, int quantStep) {
if( quantStep ==0) {
return value;
} else {
return value * quantStep;
}
}
```

When the predictor of each point has neighbor points, the point cloud encoder (e.g., the arithmetic encoder 30012) according to the embodiments may perform entropy coding on the quantized and inversely quantized residual values as described above. When the predictor of each point has no neighbor point, the point cloud encoder according to the embodiments (e.g., the arithmetic encoder 30012) may perform entropy coding on the attributes of the corresponding point without performing the above-described operation.

The point cloud encoder according to the embodiments (e.g., the lifting transformer 30010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.
2) Lift prediction process: Subtract the value obtained by multiplying the attribute value of the point by the weight from the existing attribute value to calculate a predicted attribute value.
3) Create temporary arrays called updateweight and update and initialize the temporary arrays to zero.
4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.
5) Lift update process: Divide the attribute values of the update array for all predictors by the weight value of the updateweight array of the predictor index, and add the existing attribute value to the values obtained by the division.
6) Calculate predicted attributes by multiplying the attribute values updated through the lift update process by the weight updated through the lift prediction process (stored in the QW) for all predictors. The point cloud encoder (e.g., coefficient quantizer 30011) according to the embodiments quantizes the predicted attribute values. In addition, the point cloud encoder (e.g., the arithmetic encoder 30012) performs entropy coding on the quantized attribute values.

The point cloud encoder (for example, the RAHT transformer 30008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, $g_{l\,x,y,z}$ denotes the average attribute value of voxels at level l. $g_{l\,x,y,z}$ may be calculated based on $g_{l+1\,2x,y,z}$ and $g_{l+1\,2x+1,y,z}$. The weights for $g_{l\,2x,y,z}$ and $g_{l\,2x+1,y,z}$ are w1 = $w_{l\,2x,y,z}$ and w2 = $w_{l\,2x+1,y,z}$.

$$\begin{bmatrix} g_{l-1\,x,y,z} \\ h_{l-1\,x,y,z} \end{bmatrix} = T_{w1\,w2} \begin{bmatrix} g_{l\,2x,y,z} \\ g_{l\,2x+1,y,z} \end{bmatrix}, \quad T_{w1\,w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1\,x,y,z}$ is a low-pass value and is used in the merging process at the next higher level. $h_{l-1\,x,y,z}$ denotes high-pass coefficients. The high-pass coefficients at each step are quantized and subjected to entropy coding (e.g., encoding by the arithmetic encoder 300012). The weights are calculated as $w_{l-1\,x,y,z} = w_{l\,2x,y,z} + w_{l\,2x+1,y,z}$. The root node is created through the $g_{1_{0,0,0}}$ and $g_{1_{0,0,1}}$ as follows.

$$\begin{bmatrix} gDC \\ h_{0_{0,0,0}} \end{bmatrix} = T_{w1000\,w1001} \begin{bmatrix} g_{1_{0,0,0z}} \\ g_{1_{0,0,1}} \end{bmatrix}$$

The value of gDC is also quantized and subjected to entropy coding like the high-pass coefficients.

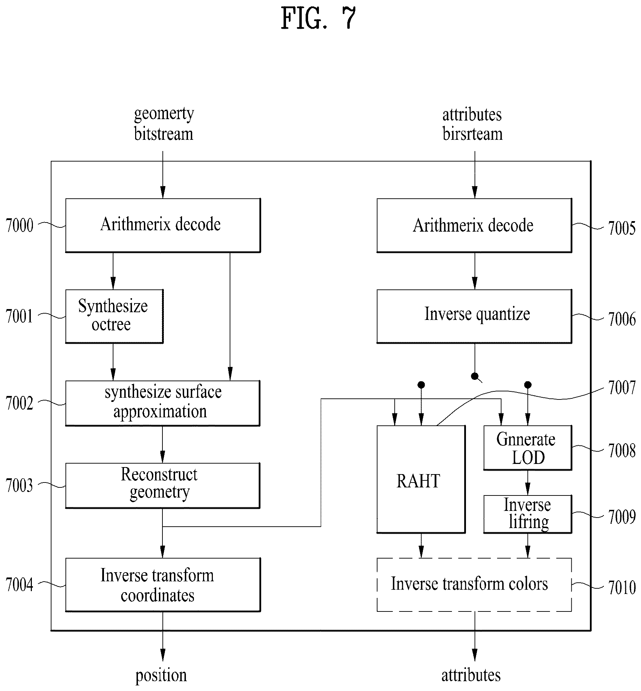

FIG. 7 illustrates a point cloud decoder according to embodiments.

The point cloud decoder illustrated in FIG. 7 is an example of the point cloud decoder and may perform a decoding operation, which is a reverse process to the encoding operation of the point cloud encoder illustrated in FIGS. 1 to 6.

As described with reference to FIGS. 1 and 6, the point cloud decoder may perform geometry decoding and attribute decoding. The geometry decoding is performed before the attribute decoding.

The point cloud decoder according to the embodiments includes an arithmetic decoder (Arithmetic decode) 7000, an octree synthesizer (Synthesize octree) 7001, a surface approximation synthesizer (Synthesize surface approximation) 7002, and a geometry reconstructor (Reconstruct geometry) 7003, a coordinate inverse transformer (Inverse transform coordinates) 7004, an arithmetic decoder (Arithmetic decode) 7005, an inverse quantizer (Inverse quantize) 7006, a RAHT transformer 7007, an LOD generator (Generate LOD) 7008, an inverse lifter (inverse lifting) 7009, and/or a color inverse transformer (Inverse transform colors) 7010.

The arithmetic decoder 7000, the octree synthesizer 7001, the surface approximation synthesizer 7002, and the geometry reconstructor 7003, and the coordinate inverse transformer 7004 may perform geometry decoding. The geometry decoding according to the embodiments may include direct decoding and trisoup geometry decoding. The direct coding and trisoup geometry decoding are selectively applied. The geometry decoding is not limited to the above-described example, and is performed as a reverse process to the geometry encoding described with reference to FIGS. 1 to 6.

The arithmetic decoder 7000 according to the embodiments decodes the received geometry bitstream based on the arithmetic coding. The operation of the arithmetic decoder 7000 corresponds to the reverse process to the arithmetic encoder 30004.

The octree synthesizer 7001 according to the embodiments may generate an octree by acquiring an occupancy code from the decoded geometry bitstream (or information on the geometry secured as a result of decoding). The occupancy code is configured as described in detail with reference to FIGS. 1 to 6.

When the trisoup geometry encoding is applied, the surface approximation synthesizer 7002 according to the embodiments may synthesize a surface based on the decoded geometry and/or the generated octree.

The geometry reconstructor 7003 according to the embodiments may regenerate geometry based on the surface and/or the decoded geometry. As described with reference to FIGS. 1 to 9, direct coding and trisoup geometry encoding are selectively applied. Accordingly, the geometry reconstructor 7003 directly imports and adds position information about the points to which direct coding is applied. When the trisoup geometry encoding is applied, the geometry reconstructor 7003 may reconstruct the geometry by performing the reconstruction operations of the geometry reconstructor 30005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 7004 according to the embodiments may acquire positions of the points by transforming the coordinates based on the reconstructed geometry.

The arithmetic decoder 7005, the inverse quantizer 7006, the RAHT transformer 7007, the LOD generator 7008, the inverse lifter 7009, and/or the color inverse transformer 7010 may perform the attribute decoding described with reference to FIG. 6. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 7005 according to the embodiments decodes the attribute bitstream by arithmetic coding.

The inverse quantizer 7006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 7007, the LOD generator 7008, and/or the inverse lifter 7009 may process the reconstructed geometry and the inversely quantized attributes. As described above, the RAHT transformer 7007, the LOD generator 7008, and/or the inverse lifter 7009 may selectively perform a decoding operation corresponding to the encoding of the point cloud encoder.

The color inverse transformer 7010 according to the embodiments performs inverse transform coding to inversely transform a color value (or texture) included in the decoded attributes. The operation of the color inverse transformer 7010 may be selectively performed based on the operation of the color transformer 30006 of the point cloud encoder.

Although not shown in the figure, the elements of the point cloud decoder of FIG. 7 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 7 described above. Additionally, the one or more processors may operate or execute a set of software programs and/or instructions for performing the operations and/or functions of the elements of the point cloud decoder of FIG. 7.

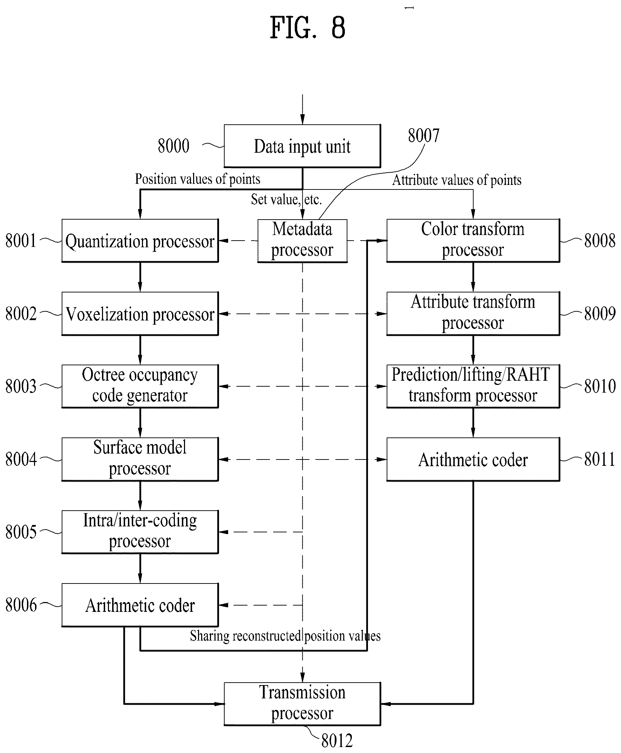

FIG. 8 illustrates a transmission device according to embodiments.

The transmission device shown in FIG. 8 is an example of the transmission device 10000 of FIG. 1 (or the point cloud encoder of FIG. 3). The transmission device illustrated in FIG. 8 may perform one or more of the operations and methods the same as or similar to those of the point cloud encoder described with reference to FIGS. 1 to 6. The transmission device according to the embodiments may include a data input unit 8000, a quantization processor 8001, a voxelization processor 8002, an octree occupancy code generator 8003, a surface model processor 8004, an intra/inter-coding processor 8005, an arithmetic coder 8006, a metadata processor 8007, a color transform processor 8008, an attribute transform processor 8009, a prediction/lifting/RAHT transform processor 8010, an arithmetic coder 8011 and/or a transmission processor 8012.

The data input unit 8000 according to the embodiments receives or acquires point cloud data. The data input unit 8000 may perform an operation and/or acquisition method the same as or similar to the operation and/or acquisition method of the point cloud video acquirer 10001 (or the acquisition process 20000 described with reference to FIG. 2).

The data input unit 8000, the quantization processor 8001, the voxelization processor 8002, the octree occupancy code generator 8003, the surface model processor 8004, the intra/inter-coding processor 8005, and the arithmetic coder 8006 perform geometry encoding. The geometry encoding according to the embodiments is the same as or similar to the geometry encoding described with reference to FIGS. 1 to 9, and thus a detailed description thereof is omitted.

The quantization processor 8001 according to the embodiments quantizes geometry (e.g., position values of points). The operation and/or quantization of the quantization processor 8001 is the same as or similar to the operation and/or quantization of the quantizer 30001 described with reference to FIG. 3. Details are the same as those described with reference to FIGS. 1 to 9. The voxelization processor 8002 according to the embodiments voxelizes the quantized position values of the points. The voxelization processor 8002 may perform an operation and/or process the same or similar to the operation and/or the voxelization process of the quantizer 30001 described with reference to FIG. 3. Details are the same as those described with reference to FIGS. 1 to 6.

The octree occupancy code generator 8003 according to the embodiments performs octree coding on the voxelized positions of the points based on an octree structure. The octree occupancy code generator 8003 may generate an occupancy code. The octree occupancy code generator 8003 may perform an operation and/or method the same as or similar to the operation and/or method of the point cloud encoder (or the octree analyzer 30002) described with reference to FIGS. 3 and 4. Details are the same as those described with reference to FIGS. 1 to 6.

The surface model processor 8004 according to the embodiments may perform trisoup geometry encoding based on a surface model to reconstruct the positions of points in a specific region (or node) on a voxel basis. The surface model processor 8004 may perform an operation and/or method the same as or similar to the operation and/or method of the point cloud encoder (e.g., the surface approximation analyzer 30003) described with reference to FIG. 3. Details are the same as those described with reference to FIGS. 1 to 6.

The intra/inter-coding processor 8005 according to the embodiments may perform intra/inter-coding on point cloud data. The intra/inter-coding processor 8005 may perform coding the same as or similar to the intra/inter-coding described with reference to FIG. 7. Details are the same as those described with reference to FIG. 7. According to embodiments, the intra/inter-coding processor 8005 may be included in the arithmetic coder 8006.

The arithmetic coder 8006 according to the embodiments performs entropy encoding on an octree of the point cloud data and/or an approximated octree. For example, the encoding scheme includes arithmetic encoding. The arithmetic coder 8006 performs an operation and/or method the same as or similar to the operation and/or method of the arithmetic encoder 30004.

The metadata processor 8007 according to the embodiments processes metadata about the point cloud data, for example, a set value, and provides the same to a necessary processing process such as geometry encoding and/or attribute encoding. Also, the metadata processor 8007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 8008, the attribute transform processor 8009, the prediction/lifting/RAHT transform processor 8010, and the arithmetic coder 8011 perform the attribute encoding. The attribute encoding according to the embodiments is the same as or similar to the attribute encoding described with reference to FIGS. 1 to 6, and thus a detailed description thereof is omitted.

The color transform processor 8008 according to the embodiments performs color transform coding to transform color values included in attributes. The color transform processor 8008 may perform color transform coding based on the reconstructed geometry. The reconstructed geometry is the same as described with reference to FIGS. 1 to 9. Also, it performs an operation and/or method the same as or similar to the operation and/or method of the color transformer 30006 described with reference to FIG. 3 is performed. A detailed description thereof is omitted.

The attribute transform processor 8009 according to the embodiments performs attribute transformation to transform the attributes based on the reconstructed geometry and/or the positions on which geometry encoding is not performed. The attribute transform processor 8009 performs an operation and/or method the same as or similar to the operation and/or method of the attribute transformer 30007 described with reference to FIG. 3. A detailed description thereof is omitted. The prediction/lifting/RAHT transform processor 8010 according to the embodiments may code the transformed attributes by any one or a combination of RAHT coding, prediction transform coding, and lifting transform coding. The prediction/lifting/RAHT transform processor 8010 performs at least one of the operations the same as or similar to the operations of the RAHT transformer 30008, the LOD generator 30009, and the lifting transformer 30010 described with reference to FIG. 3. In addition, the prediction transform coding, the lifting transform coding, and the RAHT transform coding are the same as those described with reference to FIGS. 1 to 9, and thus a detailed description thereof is omitted.

The arithmetic coder 8011 according to the embodiments may encode the coded attributes based on the arithmetic coding. The arithmetic coder 8011 performs an operation and/or method the same as or similar to the operation and/or method of the arithmetic encoder 300012.

The transmission processor 8012 according to the embodiments may transmit each bitstream containing encoded geometry and/or encoded attributes and metadata information, or transmit one bitstream configured with the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream Geom00 and one or more attribute bitstreams Attr00 and Attr10.

A slice refers to a series of syntax elements representing the entirety or part of a coded point cloud frame.

The TPS according to the embodiments may include information about each tile (e.g., coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom _tile_id) and a slice identifier (geom_slice_id) included in the GPS, and information about the data contained in the payload. As described above, the metadata processor 8007 according to the embodiments may generate and/or process the signaling information and transmit the same to the transmission processor 8012. According to embodiments, the elements to perform geometry encoding and the elements to perform attribute encoding may share data/information with each other as indicated by dotted lines. The transmission processor 8012 according to the embodiments may perform an operation and/or transmission method the same as or similar to the operation and/or transmission method of the transmitter 10003. Details are the same as those described with reference to FIGS. 1 and 2, and thus a description thereof is omitted.

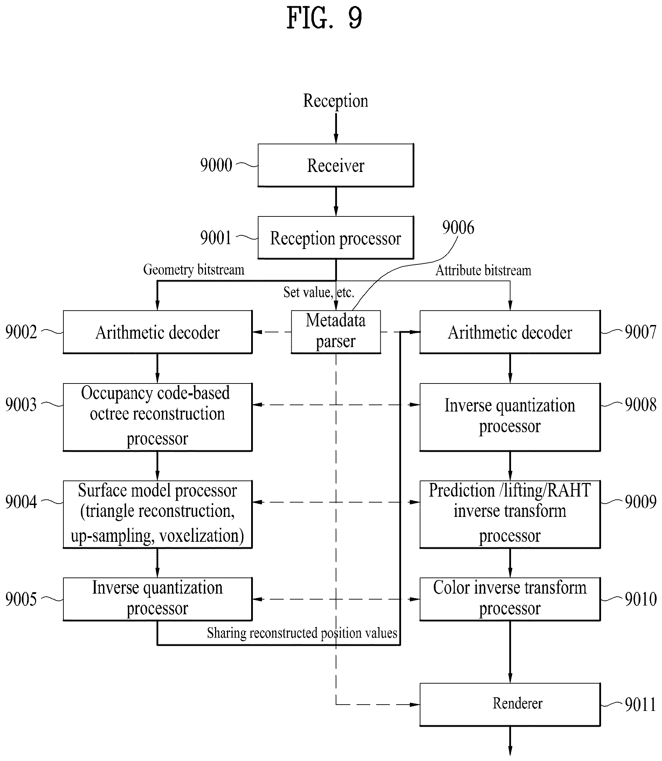

FIG. 9 illustrates a reception device according to embodiments.

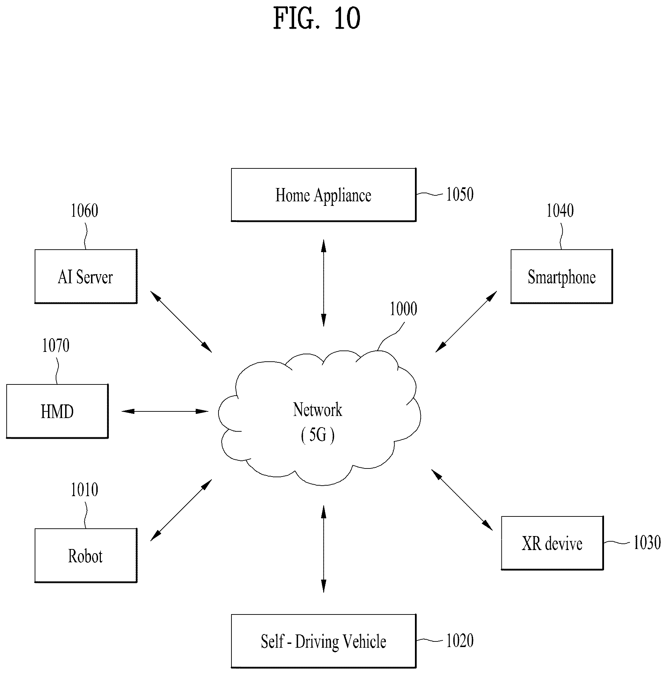

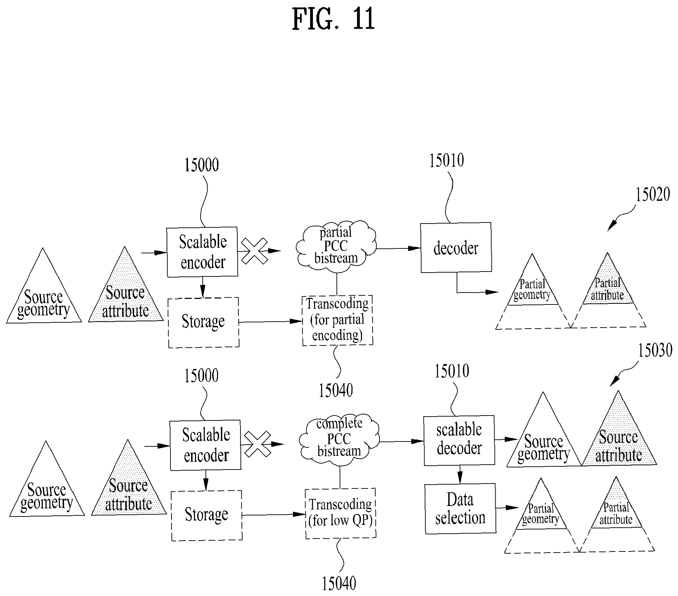

The reception device illustrated in FIG. 9 is an example of the reception device 10004 of FIG. 1 (or the point cloud decoder of FIGS. 10 and 11). The reception device illustrated in FIG. 9 may perform one or more of the operations and methods the same as or similar to those of the point cloud decoder described with reference to FIGS. 1 to 11.

The reception device according to the embodiment may include a receiver 9000, a reception processor 9001, an arithmetic decoder 9002, an occupancy code-based octree reconstruction processor 9003, a surface model processor (triangle reconstruction, up-sampling, voxelization) 9004, an inverse quantization processor 9005, a metadata parser 9006, an arithmetic decoder 9007, an inverse quantization processor 9008, a prediction/lifting/RAHT inverse transform processor 9009, a color inverse transform processor 9010, and/or a renderer 9011. Each element for decoding according to the embodiments may perform a reverse process to the operation of a corresponding element for encoding according to the embodiments.

The receiver 9000 according to the embodiments receives point cloud data. The receiver 9000 may perform an operation and/or reception method the same as or similar to the operation and/or reception method of the receiver 10005 of FIG. 1. The detailed description thereof is omitted.

The reception processor 9001 according to the embodiments may acquire a geometry bitstream and/or an attribute bitstream from the received data. The reception processor 9001 may be included in the receiver 9000.

The arithmetic decoder 9002, the occupancy code-based octree reconstruction processor 9003, the surface model processor 9004, and the inverse quantization processor 905 may perform geometry decoding. The geometry decoding according to embodiments is the same as or similar to the geometry decoding described with reference to FIGS. 1 to 10, and thus a detailed description thereof is omitted.

The arithmetic decoder 9002 according to the embodiments may decode the geometry bitstream based on arithmetic coding. The arithmetic decoder 9002 performs an operation and/or coding the same as or similar to the operation and/or coding of the arithmetic decoder 7000.

The occupancy code-based octree reconstruction processor 9003 according to the embodiments may reconstruct an octree by acquiring an occupancy code from the decoded geometry bitstream (or information about the geometry secured as a result of decoding). The occupancy code-based octree reconstruction processor 9003 performs an operation and/or method the same as or similar to the operation and/or octree generation method of the octree synthesizer 7001. When the trisoup geometry encoding is applied, the surface model processor 9004 according to the embodiments may perform trisoup geometry decoding and related geometry reconstruction (e.g., triangle reconstruction, up-sampling, voxelization) based on the surface model method. The surface model processor 9004 performs an operation the same as or similar to that of the surface approximation synthesizer 7002 and/or the geometry reconstructor 7003.

The inverse quantization processor 9005 according to the embodiments may inversely quantize the decoded geometry.

The metadata parser 9006 according to the embodiments may parse metadata contained in the received point cloud data, for example, a set value. The metadata parser 9006 may pass the metadata to geometry decoding and/or attribute decoding. The metadata is the same as that described with reference to FIG. 8, and thus a detailed description thereof is omitted.

The arithmetic decoder 9007, the inverse quantization processor 9008, the prediction/lifting/RAHT inverse transform processor 9009 and the color inverse transform processor 9010 perform attribute decoding. The attribute decoding is the same as or similar to the attribute decoding described with reference to FIGS. 1 to 10, and thus a detailed description thereof is omitted.

The arithmetic decoder 9007 according to the embodiments may decode the attribute bitstream by arithmetic coding. The arithmetic decoder 9007 may decode the attribute bitstream based on the reconstructed geometry. The arithmetic decoder 9007 performs an operation and/or coding the same as or similar to the operation and/or coding of the arithmetic decoder 7005.

The inverse quantization processor 9008 according to the embodiments may inversely quantize the decoded attribute bitstream. The inverse quantization processor 9008 performs an operation and/or method the same as or similar to the operation and/or inverse quantization method of the inverse quantizer 7006.

The prediction/lifting/RAHT inverse transform processor 9009 according to the embodiments may process the reconstructed geometry and the inversely quantized attributes. The prediction/lifting/RAHT inverse transform processor 9009 performs one or more of operations and/or decoding the same as or similar to the operations and/or decoding of the RAHT transformer 7007, the LOD generator 7008, and/or the inverse lifter 7009. The color inverse transform processor 9010 according to the embodiments performs inverse transform coding to inversely transform color values (or textures) included in the decoded attributes. The color inverse transform processor 9010 performs an operation and/or inverse transform coding the same as or similar to the operation and/or inverse transform coding of the color inverse transformer 7010. The renderer 9011 according to the embodiments may render the point cloud data.

FIG. 10 illustrates an exemplary structure operable in connection with point cloud data transmission/reception methods/devices according to embodiments.

The structure of FIG. 10 represents a configuration in which at least one of a server 1060, a robot 1010, a self-driving vehicle 1020, an XR device 1030, a smartphone 1040, a home appliance 1050, and/or a head-mount display (HMD) 1070 is connected to the cloud network 1000. The robot 1010, the self-driving vehicle 1020, the XR device 1030, the smartphone 1040, or the home appliance 1050 is called a device. Further, the XR device 1030 may correspond to a point cloud data (PCC) device according to embodiments or may be operatively connected to the PCC device.

The cloud network 1000 may represent a network that constitutes part of the cloud computing infrastructure or is present in the cloud computing infrastructure. Here, the cloud network 1000 may be configured using a 3G network, 4G or Long Term Evolution (LTE) network, or a 5G network.

The server 1060 may be connected to at least one of the robot 1010, the self-driving vehicle 1020, the XR device 1030, the smartphone 1040, the home appliance 1050, and/or the HMD 1070 over the cloud network 1000 and may assist in at least a part of the processing of the connected devices 1010 to 1070.

The HMD 1070 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1010 to 1050 to which the above-described technology is applied will be described. The devices 1010 to 1050 illustrated in FIG. 10 may be operatively connected/coupled to a point cloud data transmission device and reception device according to the above-described embodiments.

<PCC+XR>

The XR/PCC device 1030 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1030 may analyze 3D point cloud data or image data acquired through various sensors or from an external device and generate position data and attribute data about 3D points. Thereby, the XR/PCC device 1030 may acquire information about the surrounding space or a real object, and render and output an XR object. For example, the XR/PCC device 1030 may match an XR object including auxiliary information about a recognized object with the recognized object and output the matched XR object.

<PCC+XR+Mobile phone>

The XR/PCC device 1030 may be implemented as a mobile phone 1040 by applying PCC technology.

The mobile phone 1040 may decode and display point cloud content based on the PCC technology.

<PCC+Self-driving+XR>

The self-driving vehicle 1020 may be implemented as a mobile robot, a vehicle, an unmanned aerial vehicle, or the like by applying the PCC technology and the XR technology.

The self-driving vehicle 1020 to which the XR/PCC technology is applied may represent a self-driving vehicle provided with means for providing an XR image, or a self-driving vehicle that is a target of control/interaction in the XR image. In particular, the self-driving vehicle 1020 which is a target of control/interaction in the XR image may be distinguished from the XR device 1030 and may be operatively connected thereto.

The self-driving vehicle 1020 having means for providing an XR/PCC image may acquire sensor information from sensors including a camera, and output the generated XR/PCC image based on the acquired sensor information. For example, the self-driving vehicle 1020 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1220 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

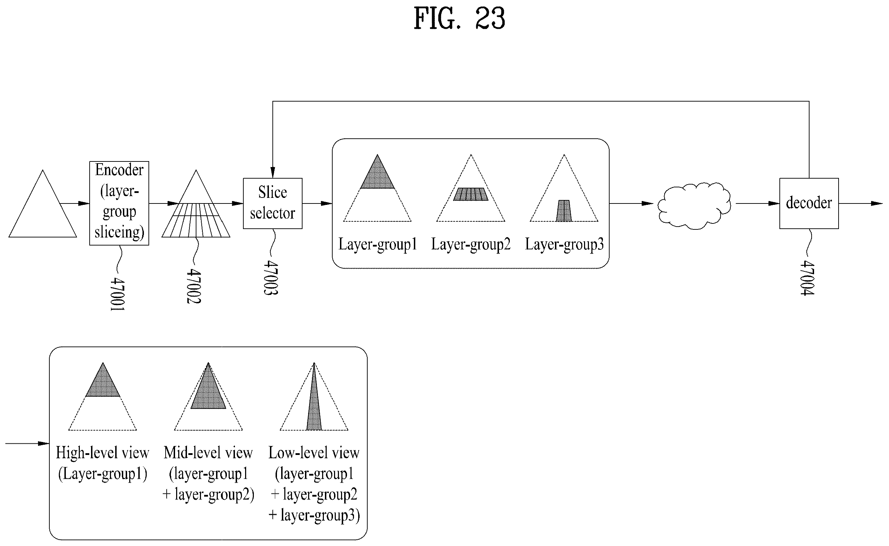

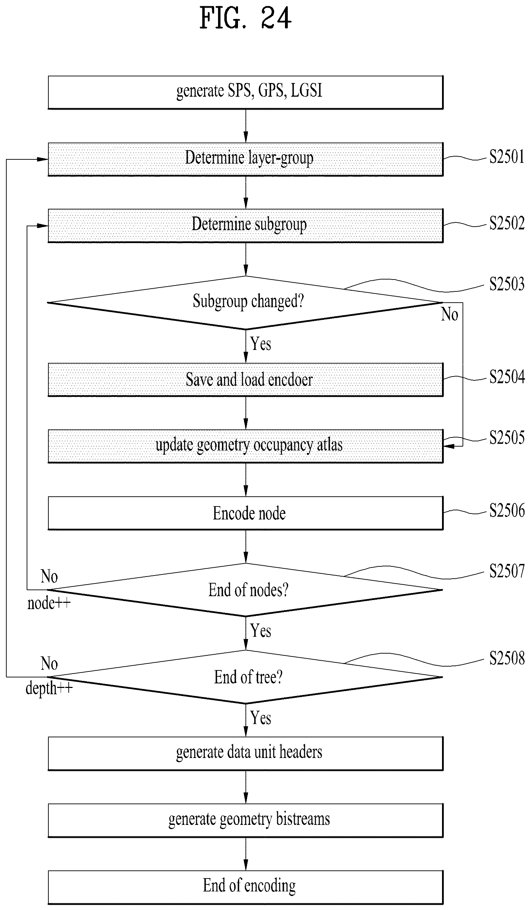

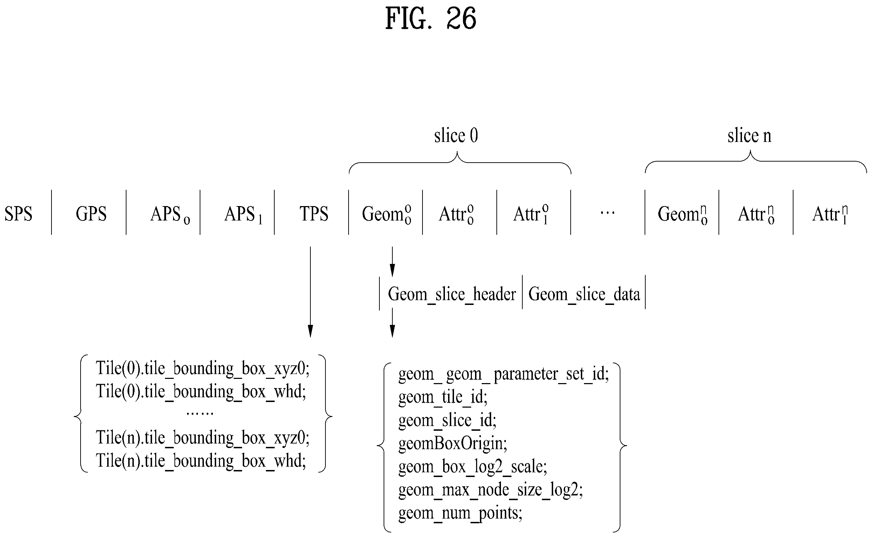

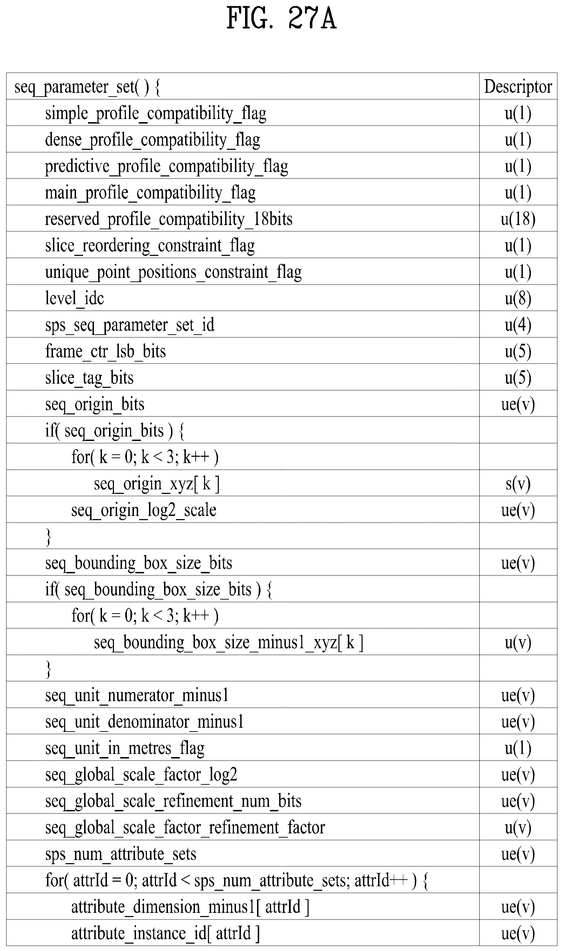

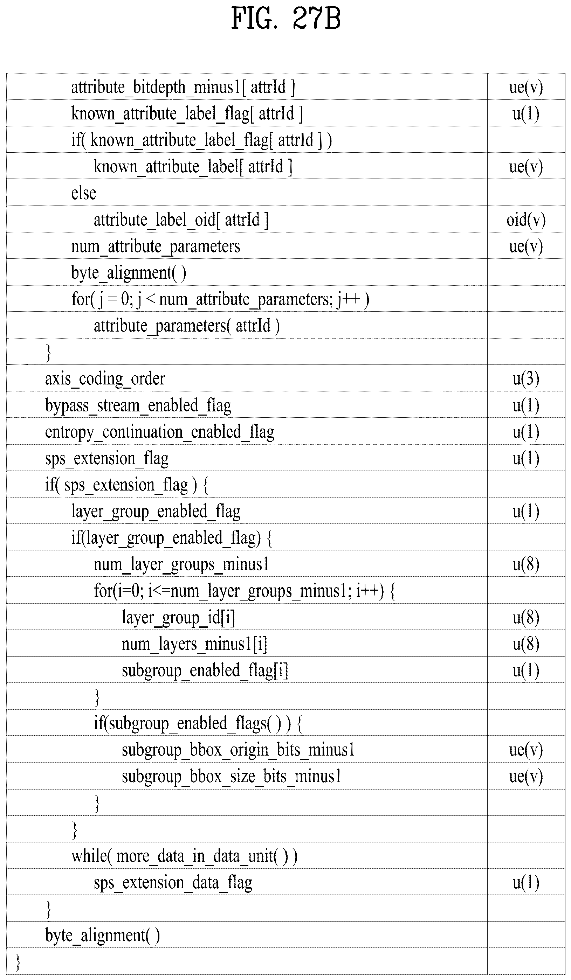

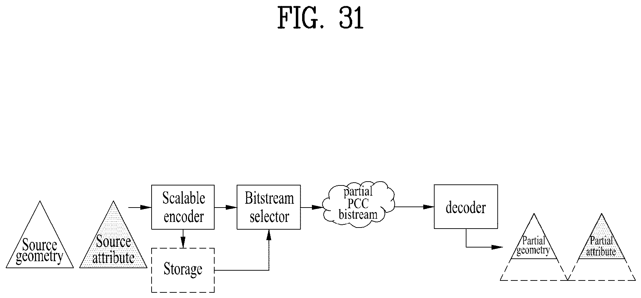

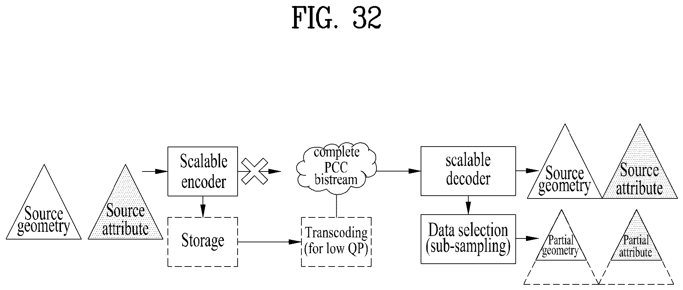

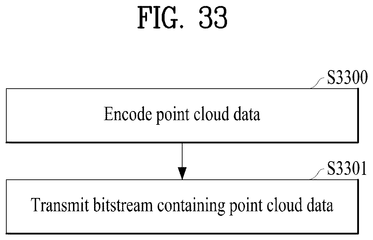

The point cloud data transmission method/device according to embodiments is to be construed as a term referring to the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 3, the transmission device of FIG. 8, the devices of FIG. 10, the encoders of FIGS. 11 and 23, the encoding of FIG. 24, the bitstream of FIG. 26, the parameter generation of FIGS. 27 to 30, the encoders of FIGS. 31 and 32, the transmission method of FIG. 33, and the like.

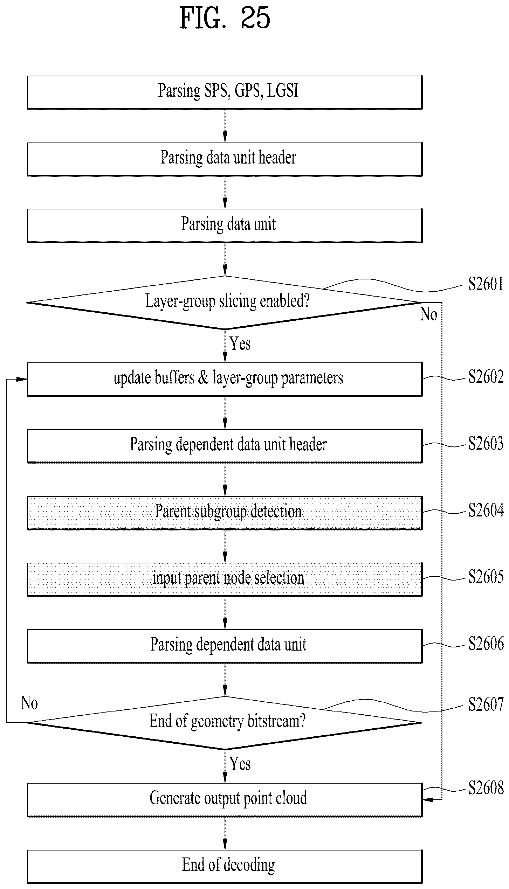

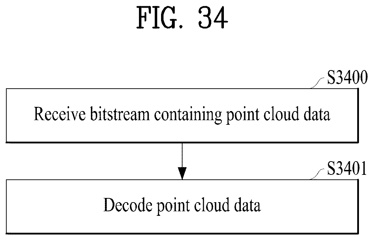

The point cloud data reception method/device according to embodiments is to be construed as a term referring to construed as a term referring to the reception device 10004 of FIG. 1, the receiver 10005 of FIG. 1, the point cloud video decoder 10006 of FIG. 1, the transmission 20002/decoding 20003/rendering 20004 of FIG. 2, the decoder of FIG. 7, the reception device of FIG. 9, the devices of FIG. 10, the decoders of FIGS. 11 and 23, the decoding of FIG. 25, the bitstream of FIG. 26 and parameter parsing of FIGS. 27 to 30, the decoders of FIGS. 31 and 32, the reception method of FIG. 34, and the like.

Further, the point cloud data transmission/reception method/device according to the embodiments may be referred to simply as a method/device.

According to embodiments, geometry data, geometry information, position information, and geometry constituting point cloud data are to be construed as having the same meaning. Attribute data and attribute information constituting the point cloud data are to be construed as having the same meaning.

The methods/devices according to embodiments may process point cloud data based on the point cloud data structure according to embodiments, in consideration of scalable transmission.

The methods/devices according to embodiments may perform an operation of using a slice-based region-adaptive planar mode. Embodiments include a method for efficiently supporting selective decoding of a part of data due to a receiver performance or a transmission speed in transmitting and receiving point cloud data, when necessary. Embodiments propose a method of selecting necessary information or removing unnecessary information in a bitstream unit by dividing geometry and attribute data, which have been conventionally delivered per data unit, into semantic units such as geometry octree and Level of Detail (LoD). Embodiments include operations for configuring a data structure composed of a point cloud. More specifically, embodiments describe a packing and signaling method for effectively transferring PCC data configured based on a layer, and include operations for applying the packing and signaling method to a scalable PCC based service. In particular, embodiments include a method of configuring slice segments and transmitting and receiving the same so as to be more suitable for a scalable PCC service when a direct compression mode is used for position compression. In particular, embodiments include a compression structure for efficiently storing and transmitting large point cloud data having a wide distribution and high point density. Referring to FIGS. 3 and 7, regarding the point cloud data transmission/reception device (also referred to simply as an encoder/decoder) according to embodiments, point cloud data is composed of a position (geometry) (e.g., XYZ coordinates) and attributes (e.g., color, reflectance, intensity, grayscale, opacity, etc.) of each datum. In point cloud compression (PCC), octree-based compression is performed to efficiently compress distribution characteristics of uneven distribution of data in 3D space, and attribute information is compressed based thereon. The PCC transmission/reception device shown in FIGS. 3 and 7 may process the operation(s) according to embodiments through each of the constituent components thereof.

FIG. 11 illustrates a process of encoding, transmission, and decoding point cloud data according to embodiments.

A point cloud encoder 15000 is a transmission device carrying out a transmission method according to embodiments, and may scalably encode and transmit point cloud data.

A point cloud decoder 15010 is a reception device carrying out a reception method according to embodiments, and may scalably decode the point cloud data.

Source data received by the encoder 15000 may include geometry data and/or attribute data.

The encoder 15000 scalably encodes the point cloud data, but does not immediately generate a partial PCC bitstream. Instead, when it receives full geometry data and full attribute data, it stores the data in a storage connected to the encoder. Then, the encoder may perform transcoding for partial encoding, and generate and transmit a partial PCC bitstream. The decoder 15010 may receive and decode the partial PCC bitstream to reconstruct partial geometry and/or partial attributes.

Upon receiving the full geometry and full attributes, the encoder 15000 may store the data in the storage connected to the encoder, and transcode the point cloud data with a low quantization parameter (QP) to generate and transmit a complete PCC bitstream. The decoder 15010 may receive and decode the complete PCC bitstream to reconstruct full geometry and/or full attributes. The decoder 15010 may select a partial geometry and/or a partial attribute from the complete PCC bitstream through data selection.

The method/device according to the embodiment compresses and transmits the point cloud data by dividing the position information about data points and feature information such as color/brightness/reflectance, which are the point cloud data, into geometry information and attribute information. In this case, an octree structure having layers may be configured according to the degree of detail or PCC data may be configured according to levels of detail (LoDs). Then, scalable point cloud data coding and representation may be performed based the configured structure or data. In this case, only a part of the point cloud data may be decoded or represented due to the performance of the receiver or the transfer rate.

In this process, the method/device according to the embodiments may remove unnecessary data in advance. In other words, when only a part of the scalable PCC bitstream needs to be transmitted (i.e., only some layers are decoded in scalable decoding), there is no way to select and send only the necessary part. Therefore, 1) the necessary part needs to be re-encoded (15020) after decoding, or 2) the receiver must selectively apply an operation after the whole data is transferred thereto (15030). However, in case 1), delay may occur due to the time for decoding and re-encoding (15020). In case 2), bandwidth efficiency may be degraded due to transmission of unnecessary data. Further, when a fixed bandwidth is used, data quality may need to be lowered for transmission (15030).

In this case, for octree-based geometry compression, both entropy-based coding and direct coding may be used. In this case, a slice configuration is required to efficiently utilize scalability.

In addition, for large-scale point clouds with a wide distribution and high point density, a delay issue may occur due to the large amount of bitstream that should be processed to access a region of interest.

Accordingly, the methods/devices according to embodiments may address such technical issues through the following technical means: an operation of using a subgroup- and/or slice-based region-adaptive planar mode, including, for example, an operation of transmitting the number of points (numPoints) per subgroup from the encoder to the decoder and calculating planarEligibleKOctreeDepth by the transmitter/receiver, an operation of predicting the number of points (numPoints) and calculating planarEligibleKOctreeDepth by the transmitter/receiver, and an operation of calculating the planarEligibleKOctreeDepth flag by the transmitter and transmitting the same to the receiver.

Accordingly, the method/device according to the embodiments may define a slice segmentation structure of point cloud data, and signal a scalable layer and slice structure for scalable transmission.

In embodiments, to ensure efficient bitstream delivery and decoding, the bitstream may be divided into specific units to be processed.

The unit according to the embodiments may be referred to as an LOD, a layer, a slice, or the like. LOD is the same term as LOD in attribute data coding, but may mean a data unit for a layered structure of a bitstream. It may be a concept corresponding to one depth or a bundle of two or more depths based on the hierarchical structure of point cloud data, for example, depths (levels) of an octree or multiple trees. Similarly, a layer is provided to generate a unit of a sub-bitstream, and is a concept that corresponds to one depth or a bundle of two or more depths, and may correspond to one LOD or two or more LODs. Also, a slice is a unit for configuring a unit of a sub-bitstream, and may correspond to one depth, a part of one depth, or two or more depths. Also, it may correspond to one LOD, a part of one LOD, or two or more LODs. According to embodiments, the LOD, the layer, and the slice may correspond to each other or one of the LOD, the layer, and the slice may be included in another one. Also, a unit according to embodiments may include an LOD, a layer, a slice, a layer group, or a subgroup, and may be referred to complementarily with one another. A segmented slice may be referred to as a fine-granularity slice (FGS).

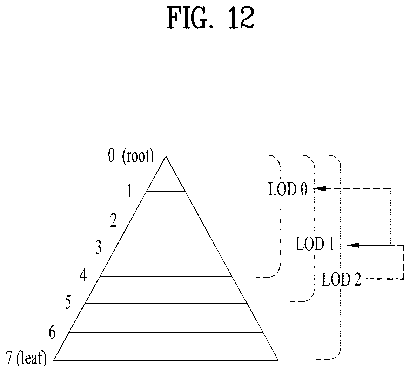

FIG. 12 illustrates a layer-based point cloud data configuration according to embodiments.

The transmission method/device according to the embodiments may configure layer-based point cloud data as shown in FIG. 12 to encode and decode the point cloud data.

Layering of point cloud data may have a layer structure in terms of SNR, spatial resolution, color, temporal frequency, bit depth, or the like depending on the application field, and may construct layers in a direction in which data density increases based on the octree structure or LoD structure.

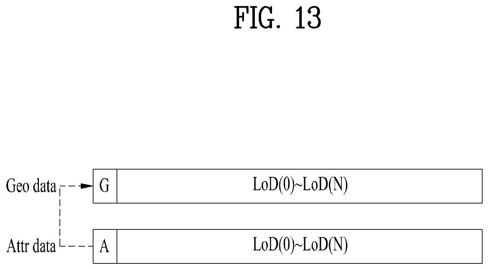

FIG. 13 illustrates a structure of geometry and attribute bitstreams according to embodiments.

The methods/devices according to embodiments may configure, encode, and decode the geometry bitstream and attribute bitstream shown in FIG. 13 based on the layering shown in FIG. 12.

A bitstream acquired through point cloud compression by the transmission device/encoder according to the embodiments may be divided into a geometry data bitstream and an attribute data bitstream according to the type of data and transmitted.

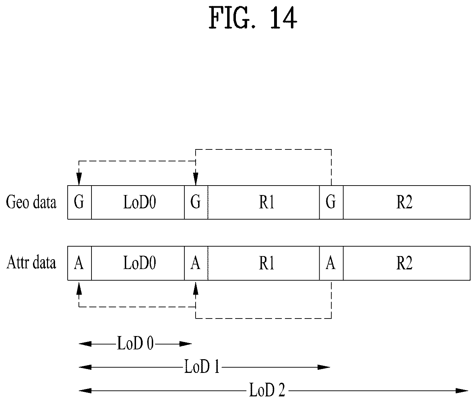

Each bitstream according to the embodiments may be composed of slices. Regardless of layer information or LoD information, the geometry data bitstream and the attribute data bitstream may each be configured as one slice and delivered. In this case, when only a part of the layer or LoD is to be used, operations of 1) decoding the bitstream, 2) selecting only a desired part and removing unnecessary parts, and 3) performing encoding again based on only the necessary information should be performed. FIG. 14 illustrates bitstream configurations according to embodiments and a bitstream sorting method according to embodiments. The transmission method/device according to the embodiments may generate a bitstream as shown in FIG. 14, and the reception method/device according to the embodiments may decode point cloud data contained in the bitstream as shown in FIG. 14. Bitstream configuration according to embodiments

In embodiments, in order to avoid unnecessary intermediate processes, a bitstream may be divided into layers (or LoDs) and transmitted.

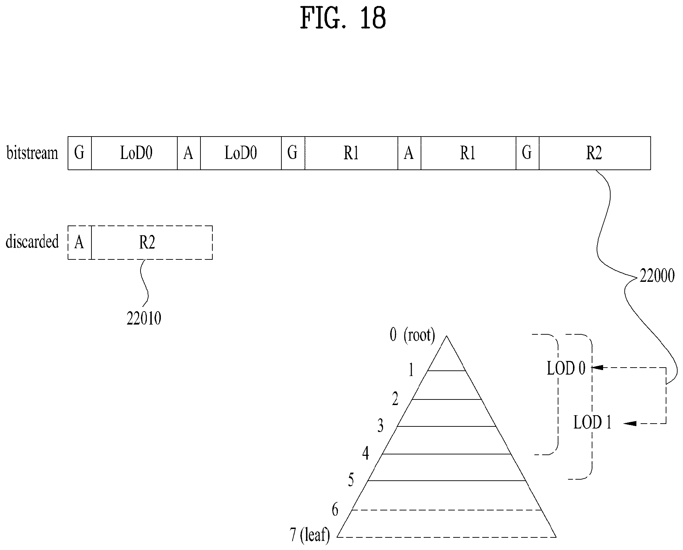

For example, in the case of LoD-based PCC technology, a low LoD is included in a high LoD. Information contained in the current LoD but not in the previous LoD, i.e., information newly added to each LoD, may be referred to as R (Rest). As shown in FIG. 18, initial LoD information and information R newly added in each LoD may be divided into independent units and transmitted.

The transmission method/device according to the embodiments may encode geometry data and generate a geometry bitstream. The geometry bitstream may be configured for each LOD or layer. The geometry bitstream may include a header (geometry header) for each LOD or layer. The header may include reference information for the next LOD or the next layer. The current LOD (layer) may further include information R (geometry data) not included in the previous LOD (layer).

The reception method/device according to the embodiments may encode attribute data and generate an attribute bitstream. The attribute bitstream may be configured for each LOD or layer, and the attribute bitstream may include a header (attribute header) for each LOD or layer. The header may include reference information for the next LOD or the next layer. The current LOD (layer) may further include information R (attribute data) not included in the previous LOD (layer).

The reception method/device according to the embodiments may receive a bitstream composed of LODs or layers and efficiently decode only necessary data without a complicated intermediate process.

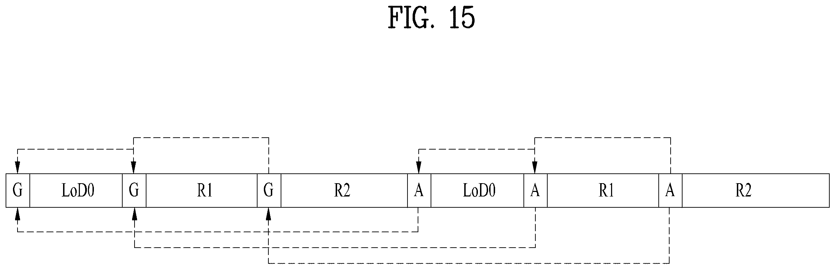

FIG. 15 illustrates a bitstream sorting method according to embodiments.

The method/device according to embodiments may arrange the bitstreams of FIG. 14 as shown in FIG. 15.

Bitstream arrangement method according to the embodiments.

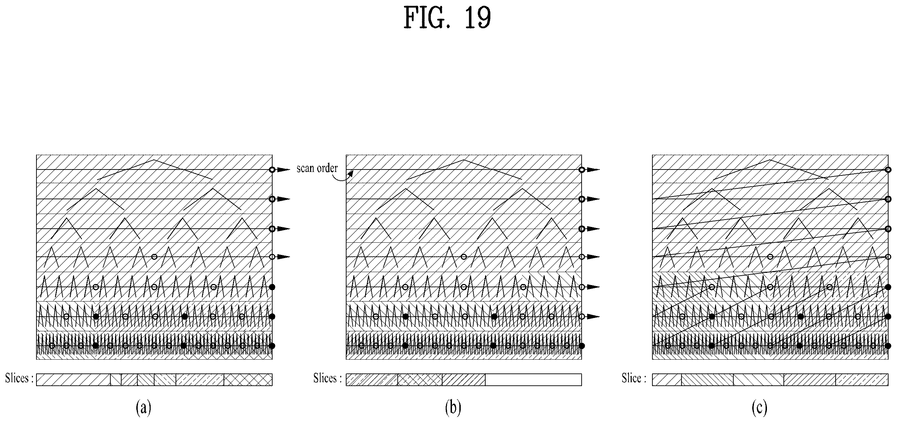

The transmission method/device according to the embodiments may transmit geometry and attributes in series as shown in FIG. 19 in transmitting a bitstream. In this case, the entire geometry information (geometry data) may be first sent according to the type of data, and then the attribute information (attribute data) may be transmitted. In this case, the geometry information may be quickly reconstructed based on the transmitted bitstream information.

In FIG. 15, for example, layers LODs containing geometry data may be first positioned in a bitstream, and layers LODs containing attribute data may be positioned behind the geometry layer. Since the attribute data depends on the geometry data, the geometry layer may be positioned first. In addition, the positions may be changed according to embodiments. Reference may be made between geometry headers and between the attribute header and the geometry headers.

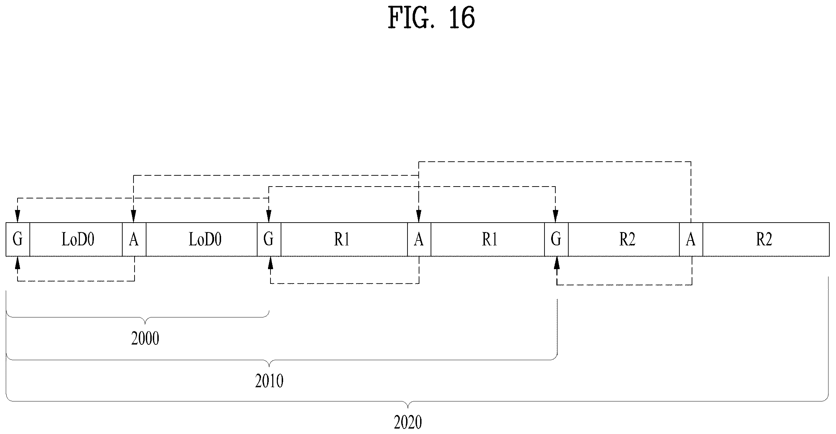

FIG. 16 illustrates a bitstream sorting method according to embodiments.

FIG. 16 is an example of bitstream arrangement according to embodiments.

Bitstreams constituting the same layer containing geometry data and attribute data may be grouped and transmitted. In this case, by using a compression technique capable of parallel decoding of geometry and attributes, decoding execution time may be shortened. In this case, information that needs to be processed first (small LoD, where geometry should precede attributes) may be placed first.

A first layer 2000 includes geometry data and attribute data corresponding to the smallest LOD 0 (Layer 0) together with each header, and a second layer 2010 includes LOD 0 (Layer 0), and includes geometry data and attribute data about points for new, more detailed layer 1 (LOD 1) that is not in LOD 0 (Layer 0) as R1 information. Similarly, a third layer 2020 may follow.

The transmission/reception method/device according to the embodiments may efficiently select a layer (or LoD) desired in the application field at a bitstream level when transmitting and receiving a bitstream. In grouping and transmitting geometry according to the bitstream arrangement method according to the embodiments (FIG. 15), there may be an empty part in the middle after selecting the bitstream level. In this case, the bitstream may need to be rearranged. When geometry and attributes are grouped and delivered according to the layers (FIG. 16), unnecessary information may be selectively removed according to the application field as follows.

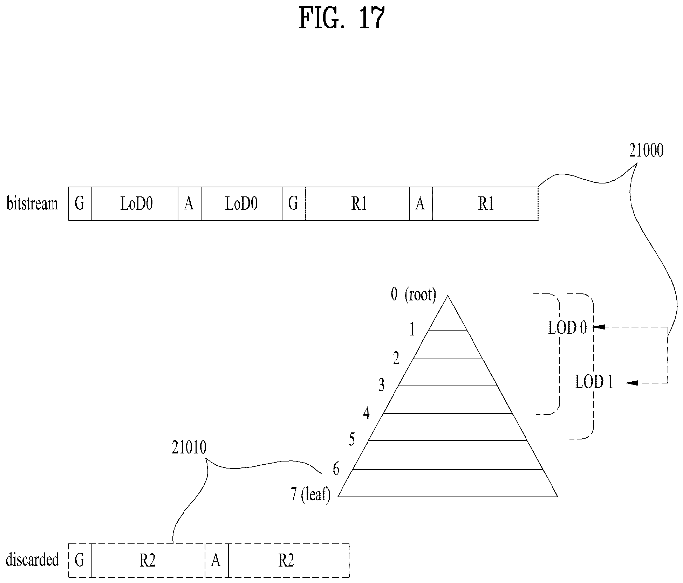

FIG. 17 illustrates a method of selecting geometry data and attribute data according to embodiments.

Bitstream selection according to embodiments

When a bitstream needs to be selected as described above, the method/device according to the embodiments may select data at the bitstream level as shown in FIG. 17: 1) symmetric selection of geometry and attributes; 2) asymmetrical selection of geometry and attributes; or 3) A combination of the above two methods.

1) Symmetric selection of geometry and attributes

FIG. 17 illustrates a case where only LoD1 (LOD 0 + R1) 21000 is selected and transmitted or decoded. In this case, information corresponding to R2 (new part of LOD 2) 21010 corresponding to a higher layer is removed in performing transmission and decoding.

FIG. 18 illustrates a method of selecting a bitstream according to embodiments.

2) Asymmetric selection of geometry and attributes

The method/device according to the embodiments may asymmetrically transmit geometry and attributes. Only the attributes of the upper layer (attribute R2 22000) may be removed and all of the geometries (level 0 (root level) to level 7 (leaf level) in the triangle octree structure) may be selected and transmitted/decoded (22010).

Referring to FIG. 12, when point cloud data is represented in an octree structure and hierarchically divided into LODs (or layers), scalable encoding/decoding (scalability) may be supported.

The scalability function according to the embodiments may include slice level scalability and/or octree level scalability.

The LoD (level of detail) according to the embodiments may be used as a unit for representing a set of one or more octree layers. In addition, it may mean a bundle of octree layers to be configured as a slice.

In attribute encoding/decoding, the LOD according to the embodiments may be extended and used as a unit for dividing data in detail in a broader sense.

That is, spatial scalability by an actual octree layer (or scalable attribute layer) may be provided for each octree layer. However, when scalability is configured in slices before bitstream parsing, selection may be made in LoDs according to embodiments.

In the octree structure, LOD0 may correspond to the root level to level 4, LOD1 may correspond to the root level to level 5, and LOD2 may correspond to the root level to level 7, which is the leaf level.

That is, as shown in FIG. 12, when scalability is utilized in slices, as in the case of scalable transmission, the provided scalable step may correspond to three steps of LoD0, LoD1, and LoD2, and the scalable step that may be provided by the octree structure in the decoding operation may correspond to eight steps from the root to the leaf.

According to embodiments, for example, in FIG. 12, when LoD0 to LoD2 are configured as respective slices, a transcoder (the transcoder 15040 of FIG. 11) of the receiver or the transmitter may select 1) LoD0 only, select 2) LoD0 and LoD1, or select 3) LoD0, LoD1, and LoD2 for scalable processing.

Example 1: When only LoD0 is selected, the maximum octree level may be 4, and one scalable layer may be selected from among octree layers 0 to 4 in the decoding process. In this case, the receiver may consider a node size obtainable through the maximum octree depth as a leaf node, and may transmit the node size through signaling information.

Example 2: When LoD0 and LoD1 are selected, layer 5 may be added. Thus, the maximum octree level may be 5, and one scalable layer may be selected from among octree layers 0 to 5 in the decoding process. In this case, the receiver may consider a node size obtainable through the maximum octree depth as a leaf node, and may transmit the node size through signaling information.

According to embodiments, an octree depth, an octree layer, and an octree level may be a unit in which data is divided in detail. Example 3: When LoD0, LoD1, and LoD2 are selected, layers 6 and 7 may be added. Thus, the maximum octree level may be 7, and one scalable layer may be selected from among octree layers 0 to 7 in the decoding process. In this case, the receiver may consider a node size obtainable through the maximum octree depth as a leaf node, and may transmit the node size through signaling information.

FIG. 19 illustrates a method of configuring a slice including point cloud data according to embodiments.

Slice configuration according to embodiments

The transmission method/device/encoder according to the embodiments may configure a G-PCC bitstream by segmenting the bitstream in a slice structure. A data unit for detailed data representation may be a slice.

For example, one or more octree layers may be matched to one slice.

The transmission method/device according to the embodiments, for example, the encoder, may configure a bitstream based on a slice 2301 by scanning a node (point) included in an octree in the direction of scan order 2300.

In FIG. 19-(a), some nodes in an octree layer may be included in one slice.

The octree layer (e.g., level 0 to level 4) may constitute one slice 2302.

Partial data of an octree layer, for example, level 5 may constitute each slice 2303, 2304, 2305.

Partial data of an octree layer, for example, level 6 may constitute each slice.

In FIGS. 19-(b) and 19-(c), when multiple octree layers are matched to one slice, only some nodes of each layer may be included. In this way, when multiple slices constitute one geometry/attribute frame, information necessary to configure a layer may be delivered for the receiver. The information may include information about layers included in each slice and information about nodes included in each layer.

In FIG. 19-(b), octree layers, for example, level 0 to level 3 and partial data of level 4 may be configured as one slice.

Octree layers, for example, partial data of level 4 and partial data of level 5 may be configured as one slice.

Octree layers, for example, partial data of level 5 and partial data of level 6 may be configured as one slice.

An octree layer, for example, partial data of level 6 may be configured as one slice.

In FIG. 23-(b), octree layers, for example, data of level 0 to level 4 may be configured as one slice.

Partial data from each of octree layer level 5, level 6, and level 7 may be configured as one slice.

The encoder and the device corresponding to the encoder according to the embodiments may encode the point cloud data, and may generate and transmit a bitstream including the encoded data and parameter information related to the point cloud data. Furthermore, in generating the bitstream, the bitstream may be generated based on the bitstream structure according to embodiments (see, for example, FIG. 26). Accordingly, the reception device, the decoder, and a corresponding device according to the embodiments may receive and parse a bitstream configured to be suitable for selective partial data decoding, and partially decode and efficiently provide the point cloud data (see FIG. 11).

Scalable transmission according to embodiments

The point cloud data transmission method/device according to the embodiments may scalably transmit a bitstream including point cloud data, and the point cloud data reception method/device according to the embodiments may scalably receive and decode the bitstream.

When the bitstream according to embodiments shown in FIG. 26 is used for scalable transmission, information needed to select a slice required by the receiver may be transmitted to the receiver. Scalable transmission may mean transmitting or decoding only a part of a bitstream, rather than decoding the entire bitstream, and the result thereof may be low resolution point cloud data. When scalable transmission is applied to the octree-based geometry bitstream, point cloud data may need to be configured with information ranging only up to a specific octree layer for the bitstream of each octree layer (FIG. 16) from a root node to a leaf node.

To this end, the target octree layer should have no dependency on information about the lower octree layer. This may be a constraint applied to geometry coding and attribute coding in common.

In addition, in scalable transmission, a scalable structure used for the transmitter/receiver to select a scalable layer needs to be delivered. Considering the octree structure according to the embodiments, all octree layers may support the scalable transmission, or the scalable transmission may be allowed only for a specific octree layer or lower layers. When a slice includes some of the octree layers, a scalable layer in which the slice is included may be indicated. Thereby, it may be determined whether the slice is necessary/not necessary in the bitstream stage. In the example of FIG. 19-(a), the yellow part starting from the root node constitutes one scalable layer without supporting scalable transmission. Following octree layers may be matched to scalable layers in a one-to-one correspondence. In general, scalability may be supported for a part corresponding to the leaf node. When multiple octree layers are included in a slice, it may be defined that one scalable layer shall be configured for the layers.

In this case, scalable transmission and scalable decoding may be used separately according to the purpose. The scalable transmission may be used at the transmitting/receiving side for the purpose of selecting information up to a specific layer without involving a decoder. The scalable decoding is used to select a specific layer during coding. That is, the scalable transmission may support selection of necessary information without involving a decoder in a compressed state (in the bitstream stage), such that the information may be transmitted or determined by the receiver. On the other hand, the scalable decoding may support encoding/decoding data only up to a required part in the encoding/decoding process, and may thus be used in such a case as scalable representation.

In this case, the layer configuration for scalable transmission may be different from the layer configuration for scalable decoding. For example, the three bottom octree layers including leaf nodes may constitute one layer in terms of scalable transmission. However, when all layer information is included in terms of scalable decoding, scalable decoding may be performed for each of leaf node layer n, leaf node layer n-1, leaf node layer n-2.

A method/device according to embodiments may perform fine granularity slicing.

When fine granularity slicing is enabled, the G-PCC bitstream (see FIG. 26 and the like) may be split into multiple sub-bitstreams in the encoding operation of the point cloud transmission method according to the embodiments. To effectively use the layering structure of G-PCC, each slice may include coded data for a partial coding layer or a partial region. Using the partitioning of slices paired with the coding layer structure, use cases of scalable transmission or spatial random access may be supported in an efficient manner.

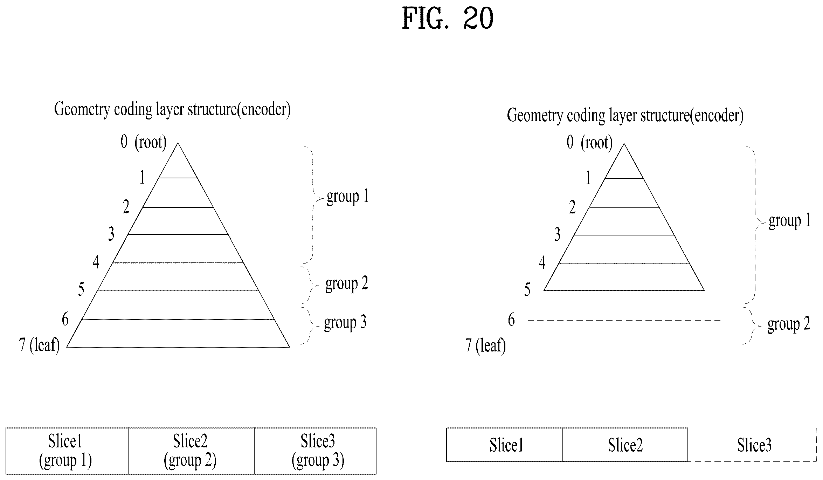

FIG. 20 illustrates a geometry coding layer structure according to embodiments.

The point cloud data transmission method/device according to embodiments, which corresponds to the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 3, the transmission device of FIG. 8, the devices of FIG. 10, the encoders of FIGS. 11 and 23, the encoding of FIG. 24, the bitstream of FIG. 26, the parameter generation of FIGS. 27 to 30, the encoders of FIGS. 31 and 32, the transmission method of FIG. 33, and the like, may encode point cloud data in a layer structure as in FIG. 20 to generate a layer-based bitstream.

The point cloud data reception method/device according to embodiments, which corresponds to the reception device 10004 of FIG. 1, the receiver 10005 of FIG. 1, the point cloud video decoder 10006 of FIG. 1, the transmission 20002/decoding 20003/rendering 20004 of FIG. 2, the decoder of FIG. 7, the reception device of FIG. 9, the devices of FIG. 10, the decoders of FIGS. 11 and 23, the decoding of FIG. 25, the bitstream of FIG. 26 and parameter parsing of FIGS. 27 to 30, the decoders of FIGS. 31 and 32, the reception method of FIG. 34, and the like, may receive layer-based point cloud data and bitstreams as in FIG. 20, and selectively decode the data.

The bitstream and point cloud data according to the embodiments may be generated based on coding layer-based slice segmentation. By slicing the bitstream at the end of the coding layer of the encoding process, the method/device according to the embodiments may select a related slice, thereby supporting scalable transmission or partial decoding.

FIG. 20-(a) shows a geometry coding layer structure with 8 layers in which each slice corresponds to a layer group. Layer group 1 3900 includes coding layers 0 to 4. Layer group 2 3901 includes coding layer 5. Layer group 3 3902 is a group for coding layers 6 and 7. When a geometry (or attribute) has a tree structure having eight levels (depths), a bitstream may be hierarchically configured by grouping data corresponding to one or more levels (depths). Each group may be included in one slice.

FIG. 20-(b) shows the decoded output when selecting 2 slices out of 3 groups. When the decoder selects group 1 and group 2, partial layers of levels (depth) 0 to 5 of the tree may be selected. That is, partial decoding of coding layers may be supported without accessing the entire bitstream by using the slices of the layer group structure.

For the partial decoding process according to the embodiments, the encoder may generate three slices generated based on the layer group structure. The decoder may perform partial decoding by selecting two slices from among the three slices.

A bitstream (FIG. 26) according to embodiments may include layer-based groups/slices 3903. Each slice may include a header including signaling information related to point cloud data (geometry data and/or attribute data) included in the slice. The reception method/device according to the embodiments may select partial slices and decode point cloud data included in a payload of the slices based on the header included in the slices.

The method/device according to the embodiments may further divide the layer group into several subgroups (subgroups) in consideration of use cases of spatial random access in addition to the layer group structure. The subgroups are mutually exclusive, and a set of subgroups may be the same as a layer group. Since the points of each subgroup form a boundary in the spatial domain, the subgroup may be represented by subgroup bounding box information. Based on spatial information, the layer group and subgroup structures may support spatial access. By efficiently comparing a region of interest (ROI) with the bounding box information about each slice, spatial random access within a frame or tile may be supported.

The method/device according to the embodiments may divide layer groups 1 to 3 into one or more subgroups.

Although FIG. 20 shows a geometry coding layer structure as an example, an attribute coding layer structure may be generated in a similar manner.

A method/device according to embodiments may perform layer-group based slice segmentation. In fine granularity slicing, each slice segment may contain coded data from a layer-group defined as follows.

A layer-group is defined as a group of contiguous tree layers whose start and end depths may be any number in the tree depth and whose start is less than its end. The order of the coded data in a slice segment may be the same as the order of the coded data in a single slice.

For example, suppose that a geometry coding layer structure with eight layers is configured, as shown in FIG. 20-(a). In this example, there are three layer-groups, each of which is matched to a different slice: layer-group 1 for coding layers 0 to 4, layer-group 2 for coding layer 5, and layer-group 3 for coding layers. When the first two slices are transmitted or selected, the decoded output will be partial layers 0 to 5, as shown in FIG. 17-(b). By using slices in the layer-group structure, partial decoding of coding layers may be supported even without accessing the entire bitstream.

A subgroup is a subset of a layer-group whose points in the subgroup are adjacent to each other. Subgroups of a layer-group are mutually exclusive, and the set of points in a subgroup of a layer-group may be the same as the set of points in the layer-group. The points in each subgroup are bounded in a spatial region, and therefore the boundaries of a subgroup may be described with subgroup boundary box information. Using spatial information, the layer-group and subgroup structure may support efficient access to a region of interest (ROI) by selecting slices that cover the ROI.

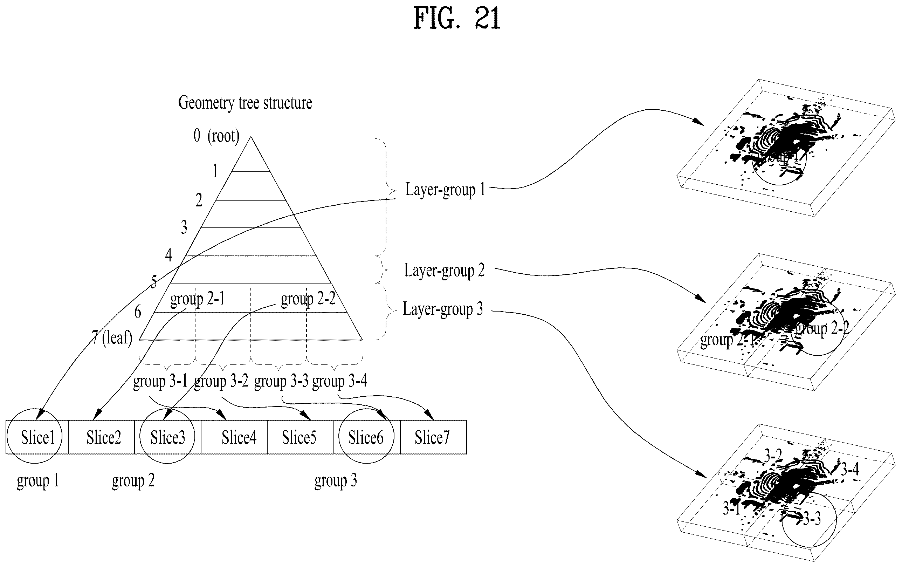

FIG. 21 illustrates a layer group structure and subgroup structure according to embodiments.

The layer structure-based point cloud data and bitstream shown in FIG. 20 may represent a bounding box as shown in FIG. 21. The subgroup structure and the bounding box corresponding to the subgroup are shown. Layer group 2 is divided into two subgroups (group2-1 and group2-2) and layer group 3 is divided into four subgroups (group3-1, group3-2, group3-3, and group3-4). The subgroups of layer group 2 and the subgroups of layer group 3 are included in different slices. Given slices of a layer group and subgroups with bounding box information, 1) the bounding box of each slice may be compared with the ROI, and 2) the slice whose subgroup bounding box correlates with the ROI may be selected and spatial access may be performed. Then, 3) the selected slice is selected. When the ROI is considered in region 3-3, slices 1, 3, and 6 are selected as subgroup bounding boxes of layer group 1 and subgroups 2-2 and 3-3 to cover the ROI region. For effective spatial access, it is assumed that there is no dependency between the subgroups of the same layer group. In live streaming or low-latency use cases, when each slice segment is received, the selection and decoding operations may be performed to increase temporal efficiency.

The method/device according to the embodiments may represent data as layers (which may be referred to as depths or levels) as a layer tree 4000 during geometry and/or attribute encoding. Point cloud data corresponding to layers (depths/levels) may be grouped into a layer group (or group) 4001 as in FIG. 39. Each layer group may be further divided (segmented) into subgroups 4002. A bitstream may be generated by configuring each subgroup as a slice. The reception device according to the embodiments may receive the bitstream, select a specific slice, decode a subgroup included in the slice, and decode a bounding box corresponding to the subgroup. For example, when slice 1 is selected, a bounding box 4003 corresponding to group 1 may be decoded. Group 1 may be data corresponding to the largest region. When the user wants to additionally view a detailed region for group 1, the method/device according to the embodiments may select slice 3 and/or slice 6, and may partially and hierarchically access the bounding box (point cloud data) of group 2-2 and/or group 3-3 for the detailed regions included in the region of group 1.

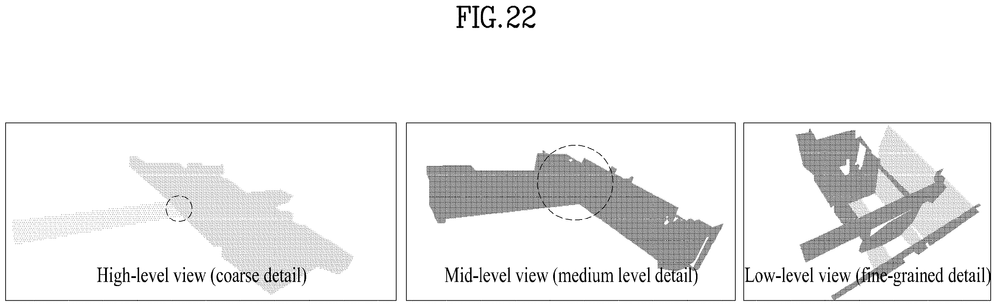

FIG. 22 illustrates a multi-resolution, multi-size ROI according to embodiments.

Layer-group slicing may provide efficient access to large-scale point cloud data or dense point cloud data based on scalability and spatial access capabilities. It may take a significant amount of time to render or display content due to the large number of points and the large size of the data. As an alternative approach, the level of detail may be adjusted based on the viewer's interest. For example, when a viewer is far away from a scene or an object, structural or global region information is more important than local detailed information. On the other hand, when the viewer moves closer to a specific region or object, detailed information about the ROI is needed. Using an adaptive approach, the renderer may efficiently provide data of sufficient quality to the viewer. FIG. 19 illustrates an example incremental detail changes for three levels of viewing distance, where the viewing distance changes based on ROI. For example, the viewing distances may be 1) a high-level view (coarse detail), 2) a medium-level view (medium-level detail), and 3) a low-level view (fine-grained detail).

FIG. 23 illustrates a layer-group slice according to embodiments.

The point cloud data transmission method/device according to embodiments, which corresponds to the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 3, the transmission device of FIG. 8, the devices of FIG. 10, the encoders of FIGS. 11 and 23, the encoding of FIG. 24, the bitstream of FIG. 26, the parameter generation of FIGS. 27 to 30, the encoders of FIGS. 31 and 32, the transmission method of FIG. 33, and the like, may encode layer-based point cloud data as in FIG. 23.

The point cloud data reception method/device according to embodiments, which corresponds to the reception device 10004 of FIG. 1, the receiver 10005 of FIG. 1, the point cloud video decoder 10006 of FIG. 1, the transmission 20002/decoding 20003/rendering 20004 of FIG. 2, the decoder of FIG. 7, the reception device of FIG. 9, the devices of FIG. 10, the decoders of FIGS. 11 and 23, the decoding of FIG. 25, the bitstream of FIG. 26 and parameter parsing of FIGS. 27 to 30, the decoders of FIGS. 31 and 32, the reception method of FIG. 34, and the like, may receive and decode slice data based on a layer group as in FIG. 23.

A method/device according to embodiments may support a high-resolution ROI based on scalability of hierarchical slicing and spatial accessibility.

Referring to FIG. 20, the encoder may generate a bitstream slice of an octree layer group or a spatial sub-group of each layer group. According to the request, a slice matching the ROI of each resolution may be selected and transmitted. Since detailed information other than the requested ROI is not included in the bitstream, the entire bitstream size may be smaller than in the tile-based approach. The decoder of the receiver may combine the slices to generate three outputs. For example, 1) the high-level view output may be generated from layer-group slice 1; 2) the mid-level view output may be generated in layer-group slice 1 and the selected sub-group of layer group 2; 3) low-level views of fine detailed outputs may be generated in layer group 1 and the selected sub-groups of layer groups 2 and 3. Since the output may be generated progressively, the receiver may provide a viewing experience, such as magnification/reduction. Resolution may gradually increase from a high level of view to a low level of view.

The encoder 60000 may correspond to a geometry encoder and an attribute encoder as a point cloud encoder according to embodiments. The encoder may slice the point cloud data based on a layer group (or group). The layer may be referred to as a depth of a tree, a level of a layer, or the like. As shown in part 60000-1, the depth of the octree of the geometry and/or the level of the attribute layer may be divided into a layer group (or a sub-group).

The slice selector 60001, in conjunction with the encoder 60000, may select a partitioned slice (or sub-slice) to selectively and partially transmit the data such as layer group 1 to layer group 3.

The decoder 6002 may decode the selectively and partially transmitted point cloud data. For example, it may decode a high-level view for layer group 1 (which has a high depth/layer/level or an index of 0, or is close to root). Thereafter, the mid-level view may be decoded by increasing the index of the depth/level over layer group 1 alone based on layer group 1 and layer group 2. The low-level view may be decoded based on layer group 1 to layer group 3.

FIG. 24 illustrates an encoding process for layer group slicing according to embodiments.

The point cloud data transmission method/device according to embodiments, which corresponds to the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 3, the transmission device of FIG. 8, the devices of FIG. 10, the encoders of FIGS. 11 and 23, the encoding of FIG. 24, the bitstream of FIG. 26, the parameter generation of FIGS. 27 to 30, the encoders of FIGS. 31 and 32, the transmission method of FIG. 33, and the like, may generate a layer group and/or a subgroup in a (segmented) slice and encode point cloud data in an FGS in a region-adaptive manner.

The input to the layer group slicing encoder is point cloud data and parameter information describing the structure of the layer group slicing. At the start of each tree depth, the layer group at the target tree depth is determined using the layer group structure parameters. For a layer group index, the subgroup index of each node is determined using a subgroup boundary box. When the subgroup for a node changes, the context state and buffer used by the previous subgroup encoder are stored, and the context state and buffer of the current subgroup encoder are loaded. Using a separate encoder for each subgroup allows the context state to persist within the subgroup. In addition, to constrain neighbor nodes to belong to the same subgroup as the current node, the coverage of the geometry occupancy atlas is updated considering the subgroup boundary over the atlas boundary. Both methods allow each coded bitstream to be decoded independently without node information from neighbor subgroups. This process is repeated for all nodes at all tree depths. When the end of the nodes at the target tree depth is reached, an FGS is generated to match each subgroup of the layer group on a one-to-one basis.

The encoder according to embodiments generates parameter information such as SPS, GPS, and LGSI, and determines subgroups. Whenever a subgroup changes, the encoder stores the information used in encoding the point cloud data within the subgroup and loads the necessary information for efficient encoding. For example, it may store context information and load the same for use in the next encoding. According to the encoding, the geometry occupancy atlas is updated. The nodes of the subgroup are encoded. Once all nodes in the occupancy tree are encoded, a geometry data unit header is generated, and a geometry bitstream containing parameters, a geometry data unit header, and a geometry data unit is generated.

Next, a technique used for independent decoding is described using pseudo code.

Encoder storage and loading (layer group and subgroup determination step):

As mentioned in the encoder process, to ensure independent decoding of each subgroup, it is necessary to store and load the encoder state. To provide flexible subgroup partitioning, this process is performed for each node in the tree layers.

For each tree layer, the layer group of the tree layer is determined and fixed for all tree depths within the layer group. A layer group is a set of consecutive tree layers. Accordingly, the layer group index changes at the start of a layer group. Based on the determined layer group, the subgroups are determined. Because a subgroup is a group of nodes bound by a subgroup bounding box, the subgroup of a node is found by comparing the position of the node with the subgroup bounding box. Whenever a subgroup or layer group changes, the encoder state of the previous subgroup is stored for later use, and the encoder state of the current subgroup is loaded for continuous encoding.

pseudo code:

```
for (depth = 0; depth < maxDepth; depth++) {
// determine layer-group index
if (depth == 0) {
curLayerGroupId = 0;
curSubgroupId = 0;
    load current context state;
sum_layers = numLayersPerLayerGroup[curLayerGroupId];
}
else if (depth == sum_layers) {
prevLayerGroupId = curLayerGroupId++;
prevSubgroupId = curSubgroupId;
curSubgroupId = 0;
save previous encoder state;
    load current encoder state;
sum_layers += numLayersPerLayerGroup[curLayerGroupId];
}
else if (numSubgroupsMinus1[curLayerGroupId] > 0) {

prevSubgroupId = curSubgroupId;
curSubgroupId = 0;
save previous encoder state;
    reload current encoder state;
}
for (all nodes in curLayerGroupId) {
// determine subgroup index
if (!(nodePos >= bbox_min && nodePos < bbox_max)) {
   for (i = 0; i<=numSubgroupsMinus1[curLayerGroupId]; i++) {
      if (nodePos >= bbox_min[i] && nodePos < bbox_max[i]){
prevSubgroupId = curSubgroupId;
   curSubgroupId = i;
// save and load encoder
   save previous encoder state;
   if (first node of the current subgroup)
load reference encoder state;
else
reload current encoder state;
break;
} } } }
}
```

Geometry Occupancy Atlas Update Step:

To consider the subgroup boundaries of the geometry occupancy atlas, _maxRange and _minRange are defined in the MortonMap3D class. When the atlas belongs to a subgroup, the minimum and maximum ranges are each set to 0, and the lengths of the edges of the cube are set, respectively. When the minimum boundary of the subgroup is greater than the minimum value of the atlas, _minRange is set to the minimum value of the subgroup boundary. When the maximum boundary of the subgroup is less than the maximum value of the atlas, _maxRange is set to the maximum value of the subgroup boundary. By using these ranges, the portion of the atlas overlapping the subgroup boundary box is considered active, and nodes in the active area are used as neighbors. This ensures that the FGS is decoded without nodes from neighbor subgroups.

pseudo code:

```
class MortonMap3D {
setRange( ) {
  for (m = 0; m < 3; m++) {
  // _maxRange
  if (bboxMax < atlasOrigin + _cubeSize)
  _maxRange[m] = bboxMax - atlasOrigin;
  else
  _maxRange[m] = _cubeSize;
  // _minRange
  if (bboxMin > atlasOrigin)
  _minRange[m] = bboxMin - atlasOrigin;
  else
  _minRange[m] = 0;
  } }
  }
```

Through this operation, the range of the atlas used for geometry coding is updated considering the subgroup boundaries. The atlas is a lookup table (LUT) of neighbor nodes within a certain range created to accelerate operations such as geometry neighbor search. When the position of the current node is outside the atlas range, the atlas needs to be updated.

Regarding the operations of the encoder and decoder, when the subgroup boundary is within the atlas boundary, the atlas boundary (_maxRange, _minRange) is updated to the subgroup boundary. This allows the use of the atlas by changing only the boundary without updating the entire atlas even when the subgroup changes within the atlas.

Here, _maxRange and _minRange indicate the minimum and maximum values of the actually usable range within the atlas. atlasOrigin and cubeSize indicate the starting position and size of the atlas. bboxMin and _bboxMax indicate the minimum and maximum values of the positions of the bounding box of a specific layer group or subgroup.

FIG. 25 illustrates a decoding process for layer group slicing according to embodiments.

FIG. 25 may follow the reverse process of FIG. 24.

The point cloud data reception method/device according to embodiments, which corresponds to the reception device 10004 of FIG. 1, the receiver 10005 of FIG. 1, the point cloud video decoder 10006 of FIG. 1, the transmission 20002/decoding 20003/rendering 20004 of FIG. 2, the decoder of FIG. 7, the reception device of FIG. 9, the devices of FIG. 10, the decoders of FIGS. 11 and 23, the decoding of FIG. 25, the bitstream of FIG. 26 and parameter parsing of FIGS. 27 to 30, the decoders of FIGS. 31 and 32, the reception method of FIG. 34, and the like, may receive (segmented) slices including layer groups and/or subgroups, and region-adaptively decode point cloud data within an FGS, as illustrated in FIG. 25.

Decoder Process:

The decoding of the layer group slicing reference SW for the first FGS is the same as the existing geometry slice decoding (parameter set parsing, data unit header parsing, data unit decoding). When layer group slicing is enabled, A subsequent dependent geometry data unit having the same value of Slice_id is considered as an FGS for the first slice. Considering context reference and node inheritance between parent and child subgroups, FGSs are assumed to be sorted in ascending order by layer_group_id and subgroup_id.

Before decoding the dependent data unit, the context state, output nodes, and layer group parameters of the previous slice are stored in a buffer for the next slice. After analyzing the syntax of the dependent data unit header, the subgroup whose subgroup boundary box is a superset of the current subgroup boundary box is found to retrieve the parent subgroup of the current subgroup. Once the parent subgroup is determined, the parent node of the current dependent data unit is selected. By using the selected node as the initial node of the decoding process, the current dependent data unit is decoded up to the tree layer covered by the current layer group. The decoding of dependent data units is repeatedly performed until the end of the geometry bitstream. Next, an additional process for finding the parent subgroup and parent node is described in more detail.

The decoder according to embodiments parses parameter information such as SPS, GPS, and LGSI contained in the bitstream. It parses information contained in the data unit header within the slice such as FGS. Based on the information in the header, the point cloud data contained in the data unit is parsed. When layer group slicing is enabled, the buffer and layer group parameters are updated, and the information in the data unit header of a dependent data unit dependent on a higher data unit is parsed. The parent subgroup is detected and the parent node is selected. The dependent data unit is parsed.

Parent Subgroup Detection Step:

In the decoding of slices such as FGSs, the nodes in the parent subgroup are used as input for child subgroups to provide consecutive decoding at the layer group boundary. They may be derived based on the parent-child spatial relationship due to the layer structure of layer group slicing. A child subgroup is a subset of a parent subgroup that is spatially exclusive of the bounding boxes of other child subgroups within the same layer group.

Based on this relationship, the spatial superset of the current segment may be found to search for a segment where the parent subgroup is present. Using subgroup_bbox_origin and subgroup_bbox_size signaled in the data unit header, the parent subgroup may be found by comparison with the boundary box information related to subgroups at the previous layer group level.

pseudo code:

```
parentLayerGroup = curLayerGroup - 1;
for (i = 0; i < numSubgroups[parentLayerGroup]; i++) {

    if (_bboxMin[parentLayerGroup][i] <= curBboxMin
    && _bboxMax[parentLayerGroup][i] > curBboxMin) {
    parentSubgroup = i;
    break;
    }
}
```

Through this operation, the parent subgroup may be inferred based on the positional relationship between the parent and child subgroups without additional signaling.

From the encoder's perspective, when defining a child subgroup, the bounding box of the parent subgroup may be defined to be partitioned. The child subgroup is a sub-region of the parent subgroup, and the encoder may infer the index of the parent subgroup using the method described above.

From the decoder's perspective, when the bounding box of the parent subgroup is a superset of the bounding box of the child subgroup, the corresponding subgroup index is determined as the parent subgroup index.

parentLayerGroup is the index of the parent layer-group related to the current layer-group.

parentSubgroup is the subgroup index of the subgroup having a parent-child relationship with the current subgroup. curLayerGroup is the current layer-group.

numSubgroups is the number of subgroups belonging to the layer-group.

_bboxMin and _bboxMax are the minimum and maximum values of the position of the bounding box of a specific layer-group or subgroup.

curBboxMin is the minimum value of the position of the bounding box of the currently coded subgroup.

Input Parent Node Selection Step:

In decoding dependent slices, the output nodes of the parent subgroup are used as input for decoding of a child subgroup. When the subgroup boundary boxes of the parent and child subgroups are the same, all nodes generated in the parent subgroup are used. On the other hand, when the subgroup boundary box of the child subgroup is a subset of the parent subgroup, the decoder selects the actual parent node. To find the parent node, each node of the parent subgroup is compared with the boundaries of the boundary box of the child subgroup.

pseudo code:

```
for (node = inNodes.begin(); node != inNodes.end(); node++) {
  if (node.Pos >= bbox_min && node.Pos < bbox_max)
  fifo.emplace_back(node);
  else
  continue;
}
```

Hereinafter, the slice structure for the layer configuration described above and a signaling method for scalable transmission are described.

FIG. 26 shows a bitstream configuration according to embodiments.

According to embodiments, the method/device may generate a bitstream as shown in FIG. 26. The bitstream contains encoded geometry data and attribute data and may also contain parameter information.

The syntax and semantics of the parameter information are configured as follows.

Information about separated slices according to embodiments may be defined in the parameter set and SEI message in the bitstream as described below.

The bitstream may contain a sequence parameter set, geometry parameter set, attribute parameter set, geometry slice header, and attribute slice header. A signal may be defined at a corresponding position or a separate position depending on the application or system to use a different application range, a different application method, and the like. In other words, it may have a different meaning depending on the position at which the signal is carried. When the signal is defined in the SPS, it may be applied equally throughout the sequence. When it is defined in the GPS, it may indicate that the signal is used for position reconstruction. When it is defined in the APS, it may indicate that the signal is applied to attribute reconstruction. When it is defined in the TPS, it may indicate that the signaling is applied only to the points within a tile. When delivered on a slice basis, it may indicate that the signaling is applied only to the corresponding slice. Also, it may be defined at a corresponding position or a separate position depending on the application or the system to use a different application range, a different application method, and the like. In addition, when the syntax elements defined belo6w are applicable to multiple point cloud data streams as well as the current point cloud data stream, the information may be carried in a superordinate parameter set or the like.

Each abbreviation means the following. SPS: Sequence Parameter Set; GPS: Geometry Parameter Set; APS: Attribute Parameter Set; TPS: Tile Parameter Set; Geom: Geometry bitstream = geometry slice header+ geometry slice data; Attr: Attrobite bitstream = attribute slice header + attribute slice data.

While the information is defined independently of the coding technique in the embodiments, the information may be defined in connection with the coding method. It may be defined in the tile parameter set in the bitstream to support regionally different scalability. In addition, when the syntax elements defined below are applicable to multiple point cloud data streams as well as the current point cloud data stream, the information may be carried in a superordinate parameter set or the like.

Alternatively, a network abstract layer (NAL) unit may be defined for the bitstream, and relevant information for selecting a layer, such as layer_id, may be delivered such that a bitstream may be selected at the system level.

Parameters (which may be referred to as metadata, signaling information, etc.) according to embodiments may be generated in a process of a transmitter according to embodiments, and delivered to a receiver according to embodiments for use in a reconstruction process.

For example, the parameters according to embodiments may be generated in a metadata processor (or metadata generator) of the transmission device according to embodiments described below and acquired by a metadata parser of the reception device according to embodiments.

Parameters describing the layer group structure are signaled at various levels. Common structure information is described in the SPS, and details of each layer group or subgroup are signaled in the slice header. Additionally, to describe the overall layer group structure, a layer group structure inventory and a dependent slice header are provided. The definition of G-PCC slices and a signaling method for fine-granularity slices (FGS) are as follows.

1) Definition of G-PCC slices

A. Slice: A point set coded with one independent fine-granularity slice and zero or more dependent fine-granularity slices. For example, a slice may include multiple FGSs, which may be referred to as segmented slices or subdivided slices.

B. Dependent fine-granularity slice: A data unit of a slice that depends on a previous data unit within the same slice.

C. Independent fine-granularity slice: The first [geometry] data unit of the slice.

2. The fine-granularity slice is activated in the SPS.

3. Essential information needed to decode dependent fine-granularity slices, including context inheritance and slice-specific boundary boxes, is delivered by the dependent data unit header.

4. To describe the relationships between fine-granularity slices, a layer group structure inventory is defined.

FIGS. 27A and 27B illustrate a sequence parameter set (SPS) according to embodiments.

simple_profile_compatibility_flag: Indicates whether the bitstream conforms to a simple profile (when set to 1) or not (when set to 0).

dense_profile_compatibility_flag: Indicates whether the bitstream conforms to a dense profile (when set to 1) or not (when set to 0).

predictive_profile_compatibility_flag: Indicates whether the bitstream conforms to a predictive profile (when set to 1) or not (when set to 0).

main_profile_compatibility_flag: Indicates whether the bitstream conforms to the main profile (when set to 1) or not (when set to 0).

slice_reordering_constraint_flag: Indicates whether the bitstream is sensitive to reordering or removal of slices within a coded point cloud frame (when set to 1) or not (when set to 0). When slice_reordering_constrain set to 1, reordering or removal of slices may cause the bitstream to be incompletely decoded.

unique_point_positions_constraint_flag: When equal to 1, it indicates that all points shall have unique positions in each coded point cloud frame. Unique_point_positions_constraint equal to 0 indicates that two or more points may have the same position. sps_seq_parameter_set_id: Identifies the SPS for reference by other data units (DUs).

seq_origin_bits: Indicates the length of each seq_origin_xyz syntax element in bits, excluding the sign bit.

seq_origin_xyz[$k$] and seq_origin_log2_scale: Indicate the XYZ origin and coding coordinates of the sequence relative to the application-specific coordinate origin. When seq_origin_bits is 0, seq_origin_xyz[k] and seq_origin_log2_scale are inferred to be 0. The k-th XYZ component of the origin is specified by the expression SeqOrigin[k].

seq_bounding_box_size_bits: Indicates the length in bits of each seq_bbox_size_minus1_xyz syntax element. seq_bounding_box_size_minus1_xyz[k]: When added by 1, indicates the k-th XYZ component of the coded volume in the sequence coordinate system.

seq_unit_numerator_minus1, seq_unit_denominator_minus1, and seq_unit_is_metres: Together indicate the length expressed as the unit vector of the sequence coordinate system.

sps_num_attribute_sets: Indicates the number of attributes listed in the SPS attribute list.

attribute_instance_id[attrId]: Indicates the instance identifier for the identified attribute.

attribute_bitdepth_minus1[attrId] plus 1 specifies the bit depth of all components of the identified attribute.

layer_group_enabled_flag equal to 1 indicates that the geometry bitstream of a slice is included in multiple slices corresponding to a coding layer group or a corresponding subgroup. layer_group_enabled_flag equal to 0 indicates that the geometry bitstream is included in a single slice.

num_layer_groups_minus1 + 1 indicates the number of layer groups representing consecutive tree layer groups that are part of the geometry coding tree structure. num_layer_groups_minus1 is in the range of 0 to the number of coding tree layers.

layer_group_id: Indicates the layer group ID of the slice. layer_group_id ranges from 0 to num_layer_groups_minus1.

num_layers_minus1 + 1 indicates the number of coding layers included in the i-th layer group. The total number of layer groups may be derived by adding all (num_layers_minus1[i] + 1) to num_layer_groups_minus1 when i is 0.

subgroup_enabled_flag is equal to 1. It indicates that the i-th layer group is divided into two or more subgroups of point sets that are identical to the point sets of the layer group. When subgroup_enabled_flag is equal to 1 for the i-th layer group, subgroup_enabled_flag is equal to 1 for the j-th layer group when j is greater than or equal to i. subgroup_enabled_flag equal to 0 indicates that the current layer group is not subdivided into multiple subgroups and is included in a single slice.

subgroup_bbox_origin_bits_minus1 + 1 is the bit length of the syntax element subgroup_bbox_origin. subgroup_bbox_size_bits_minus1 + 1: The bit length of the syntax element subgroup bbox size.

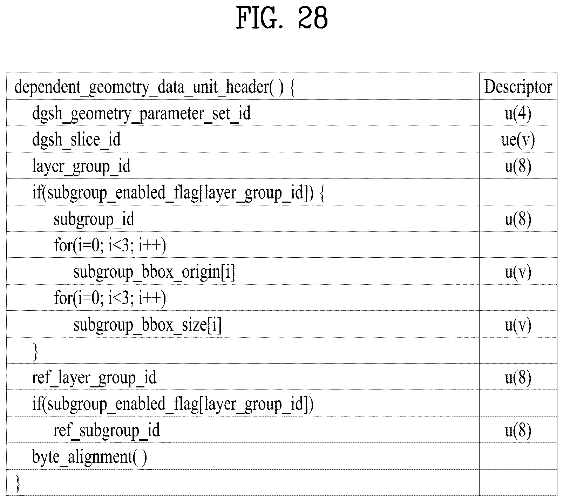

FIG. 28 illustrates a dependent geometry data unit header according to embodiments.

dgdu_geometry_parameter_set_id indicates the active GPS indicated by gps_geom_parameter_set_id. The value of dgdu_geometry_parameter_set_id is equal to the value of gdu_geometry_parameter_set_id of the corresponding slice.

dgdu_slice_id indicates the slice to which the current dependent geometry data unit belongs.

layer_group_id indicates the layer group ID of the slice. layer_group_id is in the range of 0 to num_layer_groups_minus1. When not present, layer_group_id is inferred to be 0.

subgroup_id indicates the subgroup identifier of the layer group referenced by layer_group_id. The range of subgroup_id shall be between 0 and num_subgroups_minus1[layer_group_id]. Here, subgroup_id represents the order of slices with the same layer_group _id. When not present, subgroup_id is inferred to be 0.

subgroup_bbox_origin indicates the origin position of the bounding box of the i-th subgroup indicated by subgroup_id in the j-th layer group indicated by layer_group_id.

subgroup_bbox_size indicates the size of the subgroup bounding box of the i-th subgroup indicated by subgroup_id in the j-th layer group indicated by layer_group_id.

The bounding box of points in the subgroup is described by subgroup_bbox_origin and subgroup_bbox_size. The region within the bounding box of the i-th subgroup does not overlap with the bounding box of the j-th subgroup when i is not equal to j.

ref_layer_group_id indicates the layer group identifier used for context reference of the current dependent data unit.

ref_layer_group_id is in the range of 0 to layer_group_id of the current dependent data unit.

ref_subgroup_id indicates the identifier of the reference subgroup of the layer group indicated by ref_layer_group_id. ref_subgroup_id is in the range of 0 to num_subgroup_id_minus1 of the layer group indicated by ref_layer_group_id.

The bitstream according to embodiments may contain at least one slice or segmented slices and may contain a geometry data unit and an attribute data unit. Each data unit includes a header. Additionally, the data units include an independent data unit and a dependent data unit. The dependent data unit may indicate an inclusion-related relationship according to parent-child node dependencies. FIG. 28 shows the syntax of a dependent geometry data unit header. The syntax of the geometry data unit header may be configured similarly to FIG. 28.

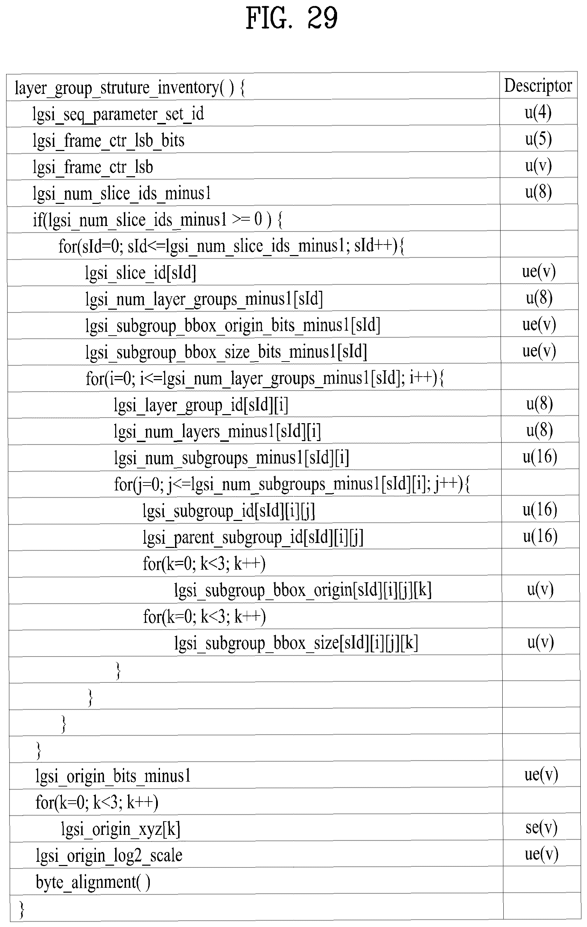

FIG. 29 illustrates a layer group structure inventory according to embodiments.

lgsi_seq_parameter_set_id indicates the value of sps_seq_parameter_set_id.

lgsi_frame_ctr_lsb_bits indicates the length in bits of the syntax element lgsi_frame_ctr_lsb.

lgsi_frame_ctr_lsb indicates the least significant bits of lgsi_frame_ctr_lsb_bits of the FrameCtr for which the layer group structure inventory is valid. The layer group structure inventory remains valid until replaced by another layer group structure inventory.

lgsi_num_slice_ids_minus1 + 1 indicates the number of slices in the layer group structure inventory.

lgsi_slice_id indicates the slice ID of the sid-th slice within the layer group structure inventory.

lgsi_num_layer_groups_minus1 + 1 indicates the number of layer groups.

lgsi_subgroup_bbox_origin_bits_minus1 + 1 is the length in bits of the syntax element lgsi_subgroup bbox origin. lgsi_subgroup_bbox_size_bits_minus1 + 1 is the length in bits of the syntax element lgsi_subgroup_bbox_size.

lgsi_layer_group_id indicates the identifier of the layer group.

lgsi_num_layers_minus1 + 1 indicates the number of coded layers in the i-th layer group of the sid-th slice. The total number of coded layers needed to decode the n-th layer group is the sum of lgsi_num_layers_minus1[sid][i] + 1 for i from 0 to n. lgsi_num_subgroups_minus1 + 1 indicates the number of subgroups in the i-th layer group of the sid-th slice.

lgsi_subgroup_id indicates the ID of the layer group.

lgsi_parent_subgroup_id indicates the identifier of the subgroup within the layer group indicated by lgsi_subgroup_id. lgsi_subgroup_bbox_origin indicates the origin of the bounding box of the subgroup indicated by lgsi_subgroup_id within the layer group indicated by lgsi_layer_group_id.

lgsi_subgroup_bbox_size indicates the size of the subgroup bounding box of the subgroup indicated by lgsi_subgroup_id within the layer group indicated by lgsi_layer_group_id.

lgsi_origin_bits_minus1 + 1 indicates the length in bits of the syntax element lgsi_origin_xyz.

lgsi_origin_xyz indicates the origin of all partitions. The value of lgsi_origin_xyz[k] is equal to sps_bounding_box_offset[k]. lgsi_origin_log2_scale indicates the scaling factor used to scale components of lgsi_origin_xyz. The value of lgsi_origin_log2_scale is equal to sps_bounding_box_offset_log2_scale.

In octree-based geometry coding, the planar mode probabilistically determines whether each node is planar. The probability should be updated every time, and it is burdensome to track the local node density of each node. As a way to reduce this burden, whether to use the planar mode may be determined based on the density at each octree level.

The density condition for determining whether to use the planar mode may be calculated as follows:

$$realDensity_{i+1} = \frac{numPoints - numPointsCodedByIdcm_i}{numSubnodes_i}$$

numPoints: The number of points within the point cloud
numPointsCodedByIdcm_i: The number of idcm nodes from the root up to the i-th octree layer
numSubnodes_i: The number of occupied sub-nodes generated at the i-th octree layer (equal to the number of children)

Whether the planar mode is used at the (i+1)-th octree layer may be determined as follows:

$$planarEligibleKOctreeDepth_{i+1} = \begin{cases} 1, & realDensity_{i+1} < th \\ 0, & otherwise \end{cases}$$

planarEligibleKOctreeDepth(i+1) may be obtained and applied by the encoder and the decoder, respectively.

When layer-group slicing according to embodiments is used, the equation for realDensity may be changed for the m-th subgroup belonging to the n-th layer-group as follows:

$$realDensity_{i+1}(n, m) = \frac{numPoints(n, m) - numPointsCodedByIdcm_i(n, m)}{numSubnodes_i(n, m)}$$

numPoints(n,m): The final number of points contained in the bounding box corresponding to the m-th subgroup belonging to the n-th layer-group
numPointsCodedByIdem_ i(n,m): numPointsCodedByIdcm_i (n,m) : The number of points included in the bounding box corresponding to the m-th subgroup belonging to the n-th layer-group among the idcm points from the root to the i-th octree layer numSubnodes_i(n,m): The number of occupied sub-nodes (i.e., children) generated at the i-th octree layer for the m-th subgroup belonging to the n-th layer-group

Based on this condition, whether to use the planar mode at the (i+1)-th octree layer for the m-th subgroup belonging to the n-th layer-group may be determined as follows.

$$planarEligibleKOctreeDepth_{i+1}(n, m) = \begin{cases} 1, & realDensity_{i+1}(n, m) < th \\ 0, & otherwise \end{cases}$$

In other words, due to layer-group slicing, the region is divided into subgroups, and the planar mode may be adaptively applied according to the characteristics of the region using the equation above.

However, in the case of layer-group slicing, different slices may be divided for an octree depth. In this case, it is difficult to directly apply the above method to higher layer-groups. For example, in the last layer-group, numPoints may be estimated because the number of points generated in the subgroups included in the slice is delivered through the header. However, since the number of points delivered through the header represents the number of final points generated in each slice, it is difficult to estimate numPoints for higher layer-groups. Embodiments may consider the following methods to solve this issue:

1) Delivering the number of final points generated at the leaf layer-group level:

For dependent slices in layer-group slicing, the encoder may transmit the final number of final points generated at the leaf layer-group level to the decoder.

2) Using an arbitrary number of points:

When numPoints is unknown, the encoder and decoder may use the same arbitrary number of points.

numPoints(n,m) may refer to the number of final points contained in the bounding box corresponding to the m-th subgroup belonging to the n-th layer-group. When there is no child subgroup (i.e., the points belong to the last layer-group), numSlicePoint carried in the header may be used. When there is a child subgroups (i.e., the points belong to a higher layer-group), an arbitrary number of points may be agreed upon for use by the encoder and the decoder.

For example, a fixed value such as the maximum number of points that may be included in each slice (MaxSlicePoint) may be used.

Alternatively, a predicted value may be used. Below is an example of prediction based on coeff_a and coeff_b.
estimated numPoints(n,m) = number of parent Subgroup nodes X coeff_a + coeff_b

3) Directly delivering planarEligibleKOctreeDepth:

Since the encoder may know the number of final points for each subgroup, it may calculate planarEligibleKOctreeDepth_(i+1)(n,m) based on the number and deliver the calculated value directly to the decoder. In this case, the decoder does not need to calculate planarEligibleKOctreeDepth. Accordingly, the complexity of the decoder may be reduced.

To this end, related signals may be delivered through the dependent slice header as described below.

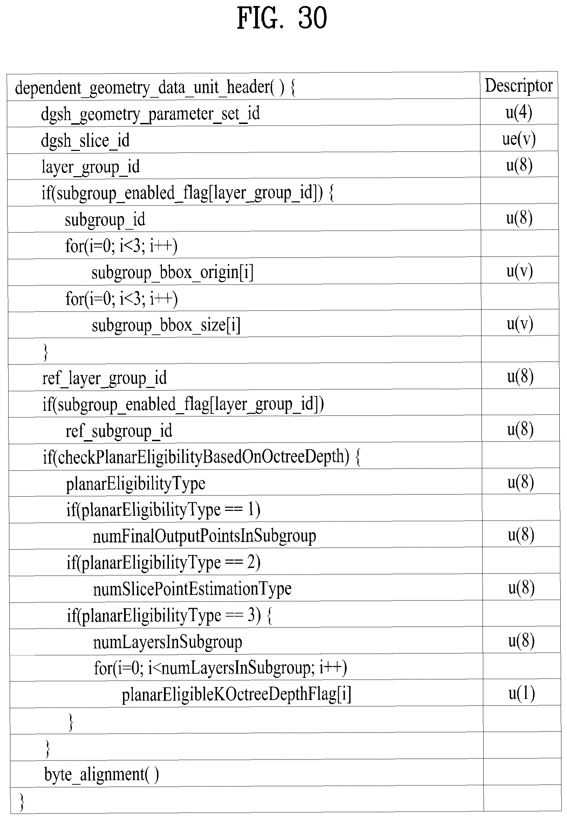

FIG. 30 illustrates a dependent geometry data unit header according to embodiments.

planarEligibilityType: May indicate the method of using the planar mode. Among the values thereof, 0 indicates application of the conventional node-adaptive planar mode, 1 indicates delivering the number of final points generated at the leaf layer-group level, 2 indicates using an arbitrary number of points, and 3 indicates delivering planar EligibleKOctreeDepth directly.

numFinalOutputPointsInSubgroup: May indicate the number of final output points contained in the subgroup bounding box in the current slice.

numSlicePointEstimationType: May indicate the method of estimating numSlicePoint for calculation of real-Density. When set to 0, it may indicate a predetermined value (for example, maxSlicePoint - the maximum number of points that may be included in a slice). When set to 1, it may indicate estimation by a linear function. In this case, the coefficients of the linear function, coeff_a and coeff_b, may be predefined or directly delivered as needed.

numLayersInSubgroup: May indicate the number of octree depths included in the current slice.

planarEligibleKOctreeDepthFlag: When set to 1, it may indicate that planar mode is used for the i-th octree depth among the octree depths included in the current slice. When set to 0, it may indicate that the planar mode is not used for the i-th octree depth among the octree depths included in the current slice. planarEligibleKOctreeDepthFlag may correspond to planarEligibleKOctreeDepth_(i+1) (n,m) generated by the method of directly delivering planar EligibleKOctreeDepth.

Each parameter may be referred to by a variety of names within the intended scope of the definition of that parameter. According to embodiments, the transmission device and the reception device may provide the following effects.

Referring to FIG. 11, according to the embodiments, compressed point cloud data is divided according to a predetermined criterion and transmitted. When layered coding is used, storage and transmission efficiency on the transmitting side may be increased by divding and transmitting the compressed data according to layers. FIG. 11 illustrates an embodiment related to compressing and providing the geometry and attributes of point cloud data. In PCC-based services, the compression rate or amount of data may be adjusted according to the receiver performance or transmission environment. When point cloud data is grouped on a slice-by-slice basis as in conventional cases, change in the receiver performance or transmission environment may require the transmitting entity to 1) pre-transcode a bitstream into a form suitable for each environment, store the same separately, and select a portion thereof at the time of transmission, or to 2) perform transcoding prior to the transmission. In this case, if the number of receiver environments to be supported increases or the transmission environment frequently changes, issues related to the storage space or a delay resulting from transcoding may be raised.

FIG. 31 illustrates transmission and reception of point cloud data based on layers according to embodiments.

Referring to FIG. 31, regarding the effects of the embodiments, by dividing and transmitting compressed data according to layers, only the necessary portion of the pre-compressed data may be selectively transmitted at the bitstream stage without a separate transcoding operation. Also, this scheme is efficient in terms of storage space because only one storage space per stream is required. Further, efficient transmission may be implemented in terms of (bitstream selector) bandwidth because only the necessary layers are selected before transmission.

FIG. 32 illustrates transmission and reception of point cloud data based on layers according to embodiments.

Referring to FIG. 32, regarding further effects of the embodiments, the embodiments include a method of dividing and transmitting compressed point cloud data according to a predetermined criterion. When layered coding is used, compressed data may be divided and transmitted according to layers. In this case, efficiency at the receiving side may be increased. FIG. 32 illustrates the operation of the transmitter and receiver when transmitting point cloud data composed of layers. In this case, when information enabling reconstruction of the entire PCC data is transmitted regardless of the performance of the receiver, the receiver needs to perform the operation of selecting only the data corresponding to the required layer (data selection or subsampling) after reconstructing the point cloud data through decoding. In this case, since the received bitstream is already decoded, it may cause delay in receiver aiming for low latency or decoding may not be performed depending on the performance of the receiver.

According to embodiments, when the bitstream is divided and transmitted in slices, the receiver may selectively deliver the bitstream to the decoder according to the density of the point cloud data to be represented according to the decoder performance or the application field. In this case, as selection is made before decoding, decoding efficiency may be enhanced, and decoders with various performance levels may be supported.

Various elements of the embodiments may be implemented by hardware, software, firmware, or a combination thereof. The elements of the embodiments may be implemented on a single chip such as hardware circuitry. According to embodiments, they may optionally be implemented on separate chips. According to embodiments, at least one of the elements of the embodiments may be implemented within one or more processors including instructions for performing the operations according to the embodiments.

The operations according to the embodiments described above may be performed by a transmission device and/or a reception device according to the embodiments. The transmission/reception device may include a transceiver configured to transmit and receive media data, a memory storing instructions (program code, algorithms, flowcharts, and/or data) for the processes according to the embodiments, and a processor configured to control the operations of the transmission/reception device.

The processor may be referred to as a controller, and may correspond to hardware, software, or a combination thereof. The operations according to the embodiments described above may be performed by the processor. Additionally, the processor may be implemented as an encoder/decoder or the like for the operations of the embodiments described above.

FIG. 33 illustrates a method of transmitting point cloud data according to embodiments.

The point cloud data transmission method/device according to the embodiments (such as the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 3, the transmission device of FIG. 8, the devices of FIG. 10, the encoders of FIGS. 11 and 23, the encoding of FIG. 24, the bitstream of FIG. 26, the parameter generation of FIGS. 27 to 30, the encoders of FIGS. 31 and 32, and the like) may transmit point cloud data as illustrated in FIG. 33.

The point cloud data transmission method according to the embodiments may include encoding point cloud data (S3300).

The point cloud data transmission method may further include transmitting a bitstream containing the point cloud data (S3301). Referring to FIGS. 12 to 19, the encoding of the point cloud data (S3300) may include encoding geometry data of of the point cloud data based on a depth of a tree, and encoding attribute data of the point cloud data based on a level of detail (LoD). One or more depths of the tree may be related to one or more LoDs. From the geometry perspective, the depth of the tree corresponds to a layer. From the attribute perspective, the level of detail corresponds to a layer. The layer group structure means scalably configuring the bitstream into layer(s) and segmented slices (FGS) rather than the entire slice. That is, the encoding (S3300) may include encoding the point cloud data by segmented slices and (region-adaptively) encoding the point cloud data by subgroups. In the encoding of the point cloud data (S3300), a bitstream is generated. Referring to FIG. 20, the bitstream may contain one or more slices. The slices may include geometry data for the one or more depths of the tree, include attribute data for one or more LoDs, or include attribute data for the one or more LoDs. The geometry data in a layer for a level of the depth may be included in one or more subgroups, and the attribute data in the layer for a level of the LoD may be included in one or more subgroups. The bitstream transmitted in the transmitting operation (S3301) may contain parameters for layers as shown in FIGS. 27 to 29. The encoding of the point cloud data (S3300) may include encoding the geometry data of the point cloud data based on a planar mode for a node of the tree. The planar mode may be determined based on density information (realDensity_(i+1)), the density information being calculated based on at least one of the number of points in a leaf node of the tree (numPoints), the number of directly encoded nodes (numPointsCodedByIdcm_i), or the number of child nodes of the node (numSubnodes_i).

The encoding of the point cloud data (S3300) may include encoding the geometry data in the subgroups m in a layer group n of the tree based on a planar mode based on density information (realDensity_(i+1) (n,m)), the density information being calculated based on at least one of the number of points in the subgroups m, the number of directly encoded points related to the layer group n (numPointsCodedByIdem_i (n,m)), or the number of child nodes in an upper layer for the subgroups in the layer group (numSubnodes_i (n,m)).

Each value is defnied as follows: numPoints(n,m): the number of final points contained in the bounding box corresponding to the m-th subgroup in the n-th layer group; numPointsCodedByIdcm_i (n,m): the number of idcm points included in the bounding box corresponding to the m-th subgroup in the n-th layer group from the root to the i-th octree layer; numSubnodes_i (n,m): the number of occupied sub-nodes generated in the i-th octree layer for the m-th subgroup in the n-th layer group (= number of children).

The number of points in the subgroups in the layer group of the tree may be determined based on a final number of points related to a leaf layer group of the tree, a maximum number of points related to the slices, or the number of parent subgroups of the subgroups.

The encoding of the point cloud data (S3300) may include generating density information calculated based on at least one of the number of points in the subgroups, the number of directly encoded points related to the layer group, or the number of child nodes in an upper layer for the subgroups in the layer group, and information about whether a planar mode is used (planarEligibleKOctreeDepth_(i+1) (n,m)), the information being computed based on a threshold.

The method in FIG. 33 may be performed by a point cloud data transmission device. The transmission device may include a memory and a processor configured to execute one or more instructions in the memory. The processor may encode point cloud data and transmit a bitstream containing the point cloud data.

FIG. 34 illustrates a method of receiving point cloud data according to embodiments.

The point cloud data reception method/device according to the embodiments (such as the reception device 10004 of FIG. 1, the receiver 10005 of FIG. 1, the point cloud video decoder 10006 of FIG. 1, the transmission 20002/decoding 20003/rendering 20004 of FIG. 2, the decoder of FIG. 7, the reception device of FIG. 9, the devices of FIG. 10, the decoders of FIGS. 11 and 23, the decoding of FIG. 25, the bitstream of FIG. 26 and parameter parsing of FIGS. 27 to 30, the decoders of FIGS. 31 and 32, and the like) may receive point cloud data, as illustrated in FIG. 34.

The point cloud data reception method may include receiving a bitstream containing point cloud data (S3400).

The reception method may further include decoding the point cloud data (S3401).

The reception method of FIG. 34 may be the reverse process of the transmission method of FIG. 33.

Referring to FIG. 30, the bitstream in the receiving (S3400) and the decoding (S3401) may contain a dependent geometry data unit header, wherein the dependent geometry data unit header may contain at least one of information about a usage type of a planar mode, information about the number of final points included in a subgroup bounding box in a slice of the bitstream, information about a method of estimating the number of points in the slice for density information, information about the number of layers in a subgroup in the slice of the bitstream, or information about whether the planar mode is used for points in the layers in the slice of the bitstream.

The decoding (S3401) may include decoding geometry data of the point cloud data in a subgroup in a layer group of the tree based on a planar mode based on density information, the density information being calculated based on at least one of the number of points in the subgroup (numPoints(n,m)), the number of directly encoded points related to the layer group (numPointsCodedByIdcm_i (n,m)), or the number of child nodes in an upper layer for the subgroup in the layer group (numSubnodes_i (n,m)).

The number of points in the subgroup in the layer group of the tree may be determined based on a final number of points related to a leaf layer group of the tree, a maximum number of points related to a slice, or the number of parent subgroups of the subgroup.

The decoding (S3401) may include decoding geometry data in the subgroup based on the planar mode based on information about whether the planar mode is used for the points in the layers in the slice of the bitstream.

The method of FIG. 34 may be performed by a reception device. The reception device may include a memory and a processor configured to execute one or more instructions in the memory. The processor may receive a bitstream containing point cloud data and decode the point cloud data.

As a result of the embodiments, a large-scale point cloud with wide distribution and high point density may be efficiently compressed and reconstructed by regions (subgroups).

The embodiments have been described in terms of a method and/or a device, and the description of the method and the description of the device may be applied complementary to each other.

Although the accompanying drawings have been described separately for simplicity, it is possible to design new embodiments by combining the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit.

According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In the present disclosure, "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to perform the related operation or interpret the related definition according to a specific condition when the specific condition is satisfied.

Operations according to the embodiments described in this specification may be performed by a transmission/-reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

[Mode for Disclosure]

As described above, related details have been described in the best mode for carrying out the embodiments.

[Industrial Applicability]

As described above, the embodiments are fully or partially applicable to a point cloud data transmission/reception device and system.

Those skilled in the art may change or modify the embodiments in various ways within the scope of the embodiments. Embodiments may include variations/modifications within the scope of the claims and their equivalents.

**Claims**

**1.** A method of point cloud data, the method comprising:

encoding point cloud data; and
transmitting a bitstream containing the point cloud data.

2. The method of claim 1, wherein the encoding of the point cloud data comprises:

encoding geometry data of the point cloud data based on a depth of a tree; and
encoding attribute data of the point cloud data based on a level of detail (LoD),
wherein one or more depths of the tree are related to one or more LoDs.

3. The method of claim 2, wherein the bitstream contains one or more slices,
wherein the slices include:

geometry data for the one or more depths of the tree; or
attribute data for one or more LoDs,
wherein the slices include attribute data for the one or more LoDs,
wherein:

the geometry data in a layer for a level of the depth is included in one or more subgroups; and
the attribute data in the layer for a level of the LoD is included in one or more subgroups.

4. The method of claim 3, wherein the bitstream contains parameters for the layer.

5. The method of claim 3, wherein the encoding of the point cloud data comprises:

encoding the geometry data of the point cloud data based on a planar mode for a node of the tree,
wherein the planar mode is determined based on density information, the density information being calculated
based on at least one of the number of points in a leaf node of the tree, the number of directly encoded nodes, or
the number of child nodes of the node.

6. The method of claim 3, wherein the encoding of the point cloud data comprises:

encoding the geometry data in the subgroups in a layer group of the tree based on a planar mode based on density
information,
the density information being calculated based on at least one of:

the number of points in the subgroups;
the number of directly encoded points related to the layer group; or
the number of child nodes in an upper layer for the subgroups in the layer group.

7. The method of claim 6, wherein the number of points in the subgroups in the layer group of the tree is determined based
on:

a final number of points related to a leaf layer group of the tree;
a maximum number of points related to the slices; or
the number of parent subgroups of the subgroups.

8. The method of claim 3, wherein the encoding of the point cloud data comprises:
generating:

density information calculated based on at least one of the number of points in the subgroups, the number of
directly encoded points related to the layer group, or the number of child nodes in an upper layer for the subgroups
in the layer group; and
information about whether a planar mode is used, the information being computed based on a threshold.

9. A device for transmitting point cloud data, comprising:

a memory; and
a processor configured to execute one or more instructions in the memory,
wherein the processor is configured to:

encode point cloud data; and

transmit a bitstream containing the point cloud data.

10. A method of receiving point cloud data, the method comprising:

receiving a bitstream containing point cloud data; and
decoding the point cloud data.

11. The method of claim 10, wherein the bitstream contains a dependent geometry data unit header, wherein the dependent geometry data unit header contains at least one of:

information about a usage type of a planar mode;
information about the number of final points included in a subgroup bounding box in a slice of the bitstream;
information about a method of estimating the number of points in the slice for density information;
information about the number of layers in a subgroup in the slice of the bitstream; or
information about whether the planar mode is used for points in the layers in the slice of the bitstream.

12. The method of claim 10, wherein the decoding of the point cloud data comprises:

decoding geometry data of the point cloud data in a subgroup in a layer group of the tree based on a planar mode based on density information, the density information being calculated based on at least one of the number of points in the subgroup;
the number of directly encoded points related to the layer group; or
the number of child nodes in an upper layer for the subgroup in the layer group.

13. The method of claim 12, wherein the number of points in the subgroup in the layer group of the tree is determined based on:

a final number of points related to a leaf layer group of the tree;
a maximum number of points related to a slice; or
the number of parent subgroups of the subgroup.

14. The method of claim 11, wherein the decoding of the point cloud data comprises:
decoding geometry data in the subgroup based on the planar mode based on information about whether the planar mode is used for the points in the layers in the slice of the bitstream.

15. A device for receiving point cloud data, comprising:

a memory; and
a processor configured to execute one or more instructions in the memory,
wherein the processor is configured to:

receive a bitstream containing point cloud data; and
decode the point cloud data.

# FIG. 1

# FIG. 2

EP 4 686 205 A1

```
  20000              20001                 20002              20003                    20004

┌─────────────┐  Ply file  ┌──────────┐  Encoded   ┌──────────────┐       ┌──────────┐  Decoded  ┌───────────┐
│             │ ─────────> │          │ ─────────> │              │ ────> │          │ ────────> │           │
│ Acquisition │ -geometry  │ Encoding │ -geometry  │ Transmission │       │ Decoding │ -geometry │ Rendering │
│             │ -attribute │          │ -attribute │              │       │          │ -attribute│           │
└─────────────┘            └──────────┘  bitstream  └──────────────┘       └──────────┘           └───────────┘
                              <- - - - - - - - - - -        ▲                   ▲
                                                            │                   │
                                                            │        Head orientation, viewport information
                                                            │                   │
                                                            │          ┌──────────────┐
                                                            └ ─ ─ ─ ─ ─│   Feedback   │
                                         Head orientation,            └──────────────┘
                                         Viewport information              20005
```

# FIG. 3

# FIG. 4

FIG. 5

Level of details

# FIG. 6

P0  P1  P4  P3  P6  P7  P9  P2  P5  P8

Original order

| P0, P1, P2, P3, P4, P5, P6, P7, P8, P9 |
|---|

LOD-based order

| P0, P5, P4, P2 | P1, P6, P3 | P9, P8, P7 |
|---|---|---|

LOD0

LOD1

LOD2

# FIG. 7

# FIG. 8

8000 — Data input unit

8007

Position values of points

Set value, etc.

Attribute values of points

8001 — Quantization processor

Metadata processor

Color transform processor — 8008

8002 — Voxelization processor

Attribute transform processor — 8009

8003 — Octree occupancy code generator

Prediction/lifting/RAHT transform processor — 8010

8004 — Surface model processor

Arithmetic coder — 8011

8005 — Intra/inter-coding processor

8006 — Arithmetic coder

Sharing reconstructed position values

Transmission processor

8012

# FIG. 9

Reception

9000 — Receiver

9001 — Reception processor

9006

Geometry bitstream

Set value, etc.

Attribute bitstream

9002 — Arithmetic decoder

Metadata parser

Arithmetic decoder — 9007

9003 — Occupancy code-based octree reconstruction processor

Inverse quantization processor — 9008

9004 — Surface model processor (triangle reconstruction, up-sampling, voxelization)

Prediction /lifting/RAHT inverse transform processor — 9009

9005 — Inverse quantization processor

Color inverse transform processor — 9010

Sharing reconstructed position values

Renderer — 9011

# FIG. 10

Home Appliance ——1050

1060

AI Server

1040

Smartphone

1070

1000

HMD

Network
( 5G )

1010

Robot

XR devive ——1030

Self - Driving Vehicle ——1020

# FIG. 11

15000

Source geometry

Source attribute

Scalable encoder ✕

Storage

partial PCC bistream

Transcoding (for partial encoding)

15040

decoder

15010

15020

Partial geometry

Partial attribute

15000

Source geometry

Source attribute

Scalable encoder ✕

Storage

complete PCC bistream

Transcoding (for low QP)

15040

scalable decoder

15010

Data selection

Source geometry

Source attribute

15030

Partial geometry

Partial attribute

FIG. 12

FIG. 13

Geo data → | G | LoD(0)~LoD(N) |

Attr data → | A | LoD(0)~LoD(N) |

FIG. 14

| Geo data | G | LoD0 | G | R1 | G | R2 |

| Attr data | A | LoD0 | A | R1 | A | R2 |

←—LoD 0—→

←———LoD 1———→

←————————LoD 2————————→

EP 4 686 205 A1

FIG. 15

FIG. 16

EP 4 686 205 A1

# FIG. 17

# FIG. 18

| bitstream | G | LoD0 | A | LoD0 | G | R1 | A | R1 | G | R2 |
|---|---|---|---|---|---|---|---|---|---|---|

| discarded | A | R2 |
|---|---|---|

22010

22000

0 (root)
1
2
3
4
5
6
7 (leaf)

LOD 0

LOD 1

# FIG. 19

# FIG. 20

Geometry coding layer structure(encoder)

0 (root)
1
2
3
4
5
6
7 (leaf)

group 1
group 2
group 3

| Slice1 (group 1) | Slice2 (group 2) | Slice3 (group 3) |
|---|---|---|

Geometry coding layer structure(encoder)

0 (root)
1
2
3
4
5
6
7 (leaf)

group 1
group 2

| Slice1 | Slice2 | Slice3 |
|---|---|---|

EP 4 686 205 A1

FIG. 21

FIG.22

High-level view (coarse detail)

Mid-level view (medium level detail)

Low-level view (fine-grained detail)

EP 4 686 205 A1

FIG. 23

Encoder
(layer-
group
sliceing)

47001

47002

Slice
selector

47003

Layer-group1  Layer-group2  Layer-group3

decoder

47004

High-level view
(Layer-group1)

Mid-level view
(layer-group1
+ layer-group2)

Low-level view
(layer-group1
+ layer-group2
+ layer-group3)

EP 4 686 205 A1

# FIG. 24

```
        ┌─────────────────────────────────────────┐
        │         generate SPS, GPS, LGSI          │
        └─────────────────────────────────────────┘
                           ↓
        ┌─────────────────────────────────────────┐
        │           Determine layer-group          │────  S2501
        └─────────────────────────────────────────┘
                           ↓
        ┌─────────────────────────────────────────┐
        │            Determine subgroup            │────  S2502
        └─────────────────────────────────────────┘
                           ↓
                  ◇ Subgroup changed? ◇────────────────  S2503
                           │                    No
                         Yes│
                           ↓
        ┌─────────────────────────────────────────┐
        │           Save and load encdoer          │────  S2504
        └─────────────────────────────────────────┘
                           ↓
        ┌─────────────────────────────────────────┐
        │       update geometry occupancy atlas    │────  S2505
        └─────────────────────────────────────────┘
                           ↓
        ┌─────────────────────────────────────────┐
        │               Encode node                │────  S2506
        └─────────────────────────────────────────┘
                           ↓
     No          ◇     End of nodes?     ◇─────────────  S2507
  node++                   │
                         Yes│
                           ↓
     No          ◇     End of tree?      ◇─────────────  S2508
  depth++                  │
                         Yes│
                           ↓
        ┌─────────────────────────────────────────┐
        │          generate data unit headers      │
        └─────────────────────────────────────────┘
                           ↓
        ┌─────────────────────────────────────────┐
        │        generate geometry bistreams       │
        └─────────────────────────────────────────┘
                           ↓
        ┌─────────────────────────────────────────┐
        │             End of encoding              │
        └─────────────────────────────────────────┘
```

# FIG. 25

```
┌─────────────────────────────────────────┐
│          Parsing SPS, GPS, LGSI         │
└─────────────────────────────────────────┘
                    ⋮
┌─────────────────────────────────────────┐
│          Parsing data unit header       │
└─────────────────────────────────────────┘
                    ⋮
┌─────────────────────────────────────────┐
│             Parsing data unit            │
└─────────────────────────────────────────┘
                    ⋮
         ◇ Layer-group slicing enabled? ◇ ────── S2601
                                         No
                  │Yes
┌─────────────────────────────────────────┐
│    update buffers & layer-group parameters│ ── S2602
└─────────────────────────────────────────┘
                    ⋮
┌─────────────────────────────────────────┐
│      Parsing dependent data unit header  │ ── S2603
└─────────────────────────────────────────┘
                    ⋮
┌─────────────────────────────────────────┐
│         Parent subgroup detection        │ ── S2604
└─────────────────────────────────────────┘
                    ⋮
┌─────────────────────────────────────────┐
│         input parent node selection      │ ── S2605
└─────────────────────────────────────────┘
                    ⋮
┌─────────────────────────────────────────┐
│       Parsing dependent data unit        │ ── S2606
└─────────────────────────────────────────┘
                    ⋮
  No     ◇ End of geometry bitstream? ◇ ────── S2607
                  │Yes
┌─────────────────────────────────────────┐
│        Generate output point cloud       │ ── S2608
└─────────────────────────────────────────┘
                    ⋮
┌─────────────────────────────────────────┐
│             End of decoding              │
└─────────────────────────────────────────┘
```

## FIG. 26

slice 0  slice n

| SPS | GPS | APS$_0$ | APS$_1$ | TPS | Geom$_0^0$ | Attr$_0^0$ | Attr$_1^0$ | $\cdots$ | Geom$_0^n$ | Attr$_0^n$ | Attr$_1^n$ |

Geom_slice_header | Geom_slice_data

```
Tile(0).tile_bounding_box_xyz0;
Tile(0).tile_bounding_box_whd;
        ......
Tile(n).tile_bounding_box_xyz0;
Tile(n).tile_bounding_box_whd;
```

```
geom_ geom_ parameter_set_id;
geom_tile_id;
geom_slice_id;
geomBoxOrigin;
geom_box_log2_scale;
geom_max_node_size_log2;
geom_num_points;
```

EP 4 686 205 A1

# FIG. 27A

| seq_parameter_set( ) { | Descriptor |
|---|---|
| simple_profile_compatibility_flag | u(1) |
| dense_profile_compatibility_flag | u(1) |
| predictive_profile_compatibility_flag | u(1) |
| main_profile_compatibility_flag | u(1) |
| reserved_profile_compatibility_18bits | u(18) |
| slice_reordering_constraint_flag | u(1) |
| unique_point_positions_constraint_flag | u(1) |
| level_idc | u(8) |
| sps_seq_parameter_set_id | u(4) |
| frame_ctr_lsb_bits | u(5) |
| slice_tag_bits | u(5) |
| seq_origin_bits | ue(v) |
| if( seq_origin_bits ) { | |
|    for( k = 0; k < 3; k++ ) | |
|       seq_origin_xyz[ k ] | s(v) |
|       seq_origin_log2_scale | ue(v) |
| } | |
| seq_bounding_box_size_bits | ue(v) |
| if( seq_bounding_box_size_bits ) { | |
|    for( k = 0; k < 3; k++ ) | |
|       seq_bounding_box_size_minus1_xyz[ k ] | u(v) |
| } | |
| seq_unit_numerator_minus1 | ue(v) |
| seq_unit_denominator_minus1 | ue(v) |
| seq_unit_in_metres_flag | u(1) |
| seq_global_scale_factor_log2 | ue(v) |
| seq_global_scale_refinement_num_bits | ue(v) |
| seq_global_scale_factor_refinement_factor | u(v) |
| sps_num_attribute_sets | ue(v) |
| for( attrId = 0; attrId < sps_num_attribute_sets; attrId++ ) { | |
|    attribute_dimension_minus1[ attrId ] | ue(v) |
|    attribute_instance_id[ attrId ] | ue(v) |

# FIG. 27B

| | |
|---|---|
| attribute_bitdepth_minus1[ attrId ] | ue(v) |
| known_attribute_label_flag[ attrId ] | u(1) |
| if( known_attribute_label_flag[ attrId ] ) | |
|     known_attribute_label[ attrId ] | ue(v) |
| else | |
|     attribute_label_oid[ attrId ] | oid(v) |
| num_attribute_parameters | ue(v) |
| byte_alignment( ) | |
|     for( j = 0; j < num_attribute_parameters; j++ ) | |
|         attribute_parameters( attrId ) | |
| } | |
| axis_coding_order | u(3) |
| bypass_stream_enabled_flag | u(1) |
| entropy_continuation_enabled_flag | u(1) |
| sps_extension_flag | u(1) |
| if( sps_extension_flag ) { | |
|     layer_group_enabled_flag | u(1) |
|     if(layer_group_enabled_flag) { | |
|         num_layer_groups_minus1 | u(8) |
|         for(i=0; i<=num_layer_groups_minus1; i++) { | |
|           layer_group_id[i] | u(8) |
|           num_layers_minus1[i] | u(8) |
|           subgroup_enabled_flag[i] | u(1) |
|         } | |
|         if(subgroup_enabled_flags( ) ) { | |
|           subgroup_bbox_origin_bits_minus1 | ue(v) |
|           subgroup_bbox_size_bits_minus1 | ue(v) |
|         } | |
|       } | |
|     while( more_data_in_data_unit( ) ) | |
|       sps_extension_data_flag | u(1) |
| } | |
|   byte_alignment( ) | |
| } | |

# FIG. 28

| dependent_geometry_data_unit_header( ) { | Descriptor |
|---|---|
| dgsh_geometry_parameter_set_id | u(4) |
| dgsh_slice_id | ue(v) |
| layer_group_id | u(8) |
| if(subgroup_enabled_flag[layer_group_id]) { | |
| subgroup_id | u(8) |
| for(i=0; i<3; i++) | |
| subgroup_bbox_origin[i] | u(v) |
| for(i=0; i<3; i++) | |
| subgroup_bbox_size[i] | u(v) |
| } | |
| ref_layer_group_id | u(8) |
| if(subgroup_enabled_flag[layer_group_id]) | |
| ref_subgroup_id | u(8) |
| byte_alignment( ) | |
| } | |

# FIG. 29

| layer_group_struture_inventory( ) { | Descriptor |
|---|---|
| lgsi_seq_parameter_set_id | u(4) |
| lgsi_frame_ctr_lsb_bits | u(5) |
| lgsi_frame_ctr_lsb | u(v) |
| lgsi_num_slice_ids_minus1 | u(8) |
| if(lgsi_num_slice_ids_minus1 >= 0 ) { | |
|    for(sId=0; sId<=lgsi_num_slice_ids_minus1; sId++){ | |
|       lgsi_slice_id[sId] | ue(v) |
|       lgsi_num_layer_groups_minus1[sId] | u(8) |
|       lgsi_subgroup_bbox_origin_bits_minus1[sId] | ue(v) |
|       lgsi_subgroup_bbox_size_bits_minus1[sId] | ue(v) |
|       for(i=0; i<=lgsi_num_layer_groups_minus1[sId]; i++){ | |
|          lgsi_layer_group_id[sId][i] | u(8) |
|          lgsi_num_layers_minus1[sId][i] | u(8) |
|          lgsi_num_subgroups_minus1[sId][i] | u(16) |
|          for(j=0; j<=lgsi_num_subgroups_minus1[sId][i]; j++){ | |
|             lgsi_subgroup_id[sId][i][j] | u(16) |
|             lgsi_parent_subgroup_id[sId][i][j] | u(16) |
|             for(k=0; k<3; k++) | |
|                lgsi_subgroup_bbox_origin[sId][i][j][k] | u(v) |
|             for(k=0; k<3; k++) | |
|                lgsi_subgroup_bbox_size[sId][i][j][k] | u(v) |
|          } | |
|         } | |
|       } | |
|    } | |
| lgsi_origin_bits_minus1 | ue(v) |
| for(k=0; k<3; k++) | |
|    lgsi_origin_xyz[k] | se(v) |
| lgsi_origin_log2_scale | ue(v) |
| byte_alignment( ) | |
| } | |

# FIG. 30

| dependent_geometry_data_unit_header( ) { | Descriptor |
|---|---|
| dgsh_geometry_parameter_set_id | u(4) |
| dgsh_slice_id | ue(v) |
| layer_group_id | u(8) |
| if(subgroup_enabled_flag[layer_group_id]) { | |
| subgroup_id | u(8) |
| for(i=0; i<3; i++) | |
| subgroup_bbox_origin[i] | u(v) |
| for(i=0; i<3; i++) | |
| subgroup_bbox_size[i] | u(v) |
| } | |
| ref_layer_group_id | u(8) |
| if(subgroup_enabled_flag[layer_group_id]) | |
| ref_subgroup_id | u(8) |
| if(checkPlanarEligibilityBasedOnOctreeDepth) { | |
| planarEligibilityType | u(8) |
| if(planarEligibilityType == 1) | |
| numFinalOutputPointsInSubgroup | u(8) |
| if(planarEligibilityType == 2) | |
| numSlicePointEstimationType | u(8) |
| if(planarEligibilityType == 3) { | |
| numLayersInSubgroup | u(8) |
| for(i=0; i<numLayersInSubgroup; i++) | |
| planarEligibleKOctreeDepthFlag[i] | u(1) |
| } | |
| } | |
| byte_alignment( ) | |
| } | |

# FIG. 31

Source geometry | Source attribute → Scalable encoder → Bitstream selector → partial PCC bistream → decoder → Partial geometry | Partial attribute

Scalable encoder → Storage → Bitstream selector

# FIG. 32

# FIG. 33

```
                                                    ┌─ S3300
┌─────────────────────────────────────────────┐
│             Encode point cloud data          │
└─────────────────────────────────────────────┘
                        │
                        ▼                      ┌─ S3301
┌─────────────────────────────────────────────┐
│    Transmit bitstream containing point cloud data │
└─────────────────────────────────────────────┘
```

# FIG. 34

```
                                              ┌ S3400
┌─────────────────────────────────────────────┐
│  Receive bitstream containing point cloud data │
└─────────────────────────────────────────────┘
                     │
                     ▼                        ┌ S3401
┌─────────────────────────────────────────────┐
│         Decode point cloud data              │
└─────────────────────────────────────────────┘
```

# EP 4 686 205 A1

## INTERNATIONAL SEARCH REPORT

| | International application No. |
|---|---|
| | **PCT/KR2024/003482** |

| | | |
|---|---|---|
| **A.** | **CLASSIFICATION OF SUBJECT MATTER** | |
| | **H04N 19/597**(2014.01)i; **H04N 19/174**(2014.01)i; **H04N 19/30**(2014.01)i; **H04N 19/157**(2014.01)i; **H04N 19/96**(2014.01)i; **H04N 19/91**(2014.01)i; **H04N 19/70**(2014.01)i | |
| | According to International Patent Classification (IPC) or to both national classification and IPC | |

| | |
|---|---|
| **B.** | **FIELDS SEARCHED** |
| Minimum documentation searched (classification system followed by classification symbols) | |
| H04N 19/597(2014.01); G06T 17/20(2006.01); G06T 9/00(2006.01); G06T 9/40(2006.01); H04N 19/154(2014.01); H04N 19/70(2014.01); H04N 19/85(2014.01) | |
| Documentation searched other than minimum documentation to the extent that such documents are included in the fields searched | |
| Korean utility models and applications for utility models: IPC as above<br>Japanese utility models and applications for utility models: IPC as above | |
| Electronic data base consulted during the international search (name of data base and, where practicable, search terms used) | |
| eKOMPASS (KIPO internal) & keywords: 부호화(encoding), 복호화(decoding), 포인트 클라우드(point cloud), 비트스트림(bitstream), 지오메트리(geometry), 어트리뷰트(attribute), 레벨 오브 디테일(level of detail, LoD), 깊이(depth) | |

**C.     DOCUMENTS CONSIDERED TO BE RELEVANT**

| Category* | Citation of document, with indication, where appropriate, of the relevant passages | Relevant to claim No. |
|---|---|---|
| X | WO 2023-287213 A1 (LG ELECTRONICS INC.) 19 January 2023 (2023-01-19)<br>See paragraphs [0098], [0296], [0301], [0315], [0396], [0576], [0696] and [0890]; and claims 1-6. | 1-4,9-11,14-15 |
| Y | | 5-8,12-13 |
| Y | MPEG 3D GRAPHICS CODING. G-PCC 2nd Edition codec description. ISO/IEC JTC 1/SC 29/WG 7, N00314. pp. 1-58, 21 June 2022.<br>See pages 35-36. | 5-8,12-13 |
| X | WO 2023-037040 A1 (NOKIA TECHNOLOGIES OY) 16 March 2023 (2023-03-16)<br>See paragraphs [0038], [0074] and [0145]; claim 10; and figures 5a-5b. | 1,9-10,15 |
| X | WO 2023-036316 A1 (BEIJING BYTEDANCE NETWORK TECHNOLOGY CO., LTD. et al.) 16 March 2023 (2023-03-16)<br>See paragraphs [0032] and [0057]; and claims 1 and 59. | 1,9-10,15 |

| | | | |
|---|---|---|---|
| ✓ Further documents are listed in the continuation of Box C. | | ✓ See patent family annex. | |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 June 2024** | **26 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/003482** |

| C. | DOCUMENTS CONSIDERED TO BE RELEVANT | | |
| --- | --- | --- |
| Category* | Citation of document, with indication, where appropriate, of the relevant passages | Relevant to claim No. |
| X | US 2023-0082784 A1 (TENCENT TECHNOLOGY (SHENZHEN) COMPANY LIMITED) 16 March 2023 (2023-03-16)<br>   See paragraphs [0078], [0088] and [0090]; and figure 6. | 1,9-10,15 |

Form PCT/ISA/210 (second sheet) (July 2022)

International application No.

**PCT/KR2024/003482**

| Patent document cited in search report | | | Publication date (day/month/year) | Patent family member(s) | | | Publication date (day/month/year) |
|---|---|---|---|---|---|---|---|
| WO | 2023-287213 | A1 | 19 January 2023 | CN | 117730539 | A | 19 March 2024 |
| | | | | EP | 4373096 | A1 | 22 May 2024 |
| WO | 2023-037040 | A1 | 16 March 2023 | | None | | |
| WO | 2023-036316 | A1 | 16 March 2023 | | None | | |
| US | 2023-0082784 | A1 | 16 March 2023 | CN | 115150384 | A | 04 October 2022 |
| | | | | CN | 115150384 | B | 18 August 2023 |
| | | | | CN | 117176715 | A | 05 December 2023 |
| | | | | JP | 2024-506623 | A | 14 February 2024 |
| | | | | KR | 10-2023-0137459 | A | 04 October 2023 |
| | | | | WO | 2022-206200 | A1 | 06 October 2022 |

Form PCT/ISA/210 (patent family annex) (July 2022)